Europäisches Patentamt

(19) European Patent Office

Office européen des brevets

(11) Publication number: **0 133 003 B1**

(12) **EUROPEAN PATENT SPECIFICATION**

(45) Date of publication of patent specification: **13.03.91**  (51) Int. Cl.⁵: **B62D 5/04**

(21) Application number: **84304990.9**

(22) Date of filing: **23.07.84**

(54) **Power assist steering gear assembly.**

(30) Priority: **22.07.83 JP 132827/83**
**22.07.83 JP 132828/83**

(43) Date of publication of application:
**13.02.85 Bulletin 85/07**

(45) Publication of the grant of the patent:
**13.03.91 Bulletin 91/11**

(84) Designated Contracting States:
**BE DE FR GB IT SE**

(56) References cited:
**EP-A- 0 101 579        DE-A- 2 363 080**
**DE-A- 2 742 076        DE-A- 3 402 332**
**US-A- 1 231 885        US-A- 2 446 393**
**US-A- 2 587 377        US-A- 3 176 962**
**US-A- 4 415 054**

(73) Proprietor: **NIPPON SEIKO KABUSHIKI KAISHA**
**2-3-2, Marunouchi**
**Chiyoda-ku Tokyo(JP)**

(72) Inventor: **Saito, Naoki**
**1135-1, Hakoda-machi**
**Maebashi-shi Gunma-ken(JP)**

(74) Representative: **Milhench, Howard Leslie et al**
**R.G.C. Jenkins & Co. 26 Caxton Street**
**London SW1H 0RJ(GB)**

## Description

This invention relates to a power assisted steering assembly for a vehicle which uses an electric motor as a power source to reduce or assist the steering force required for steering the vehicle.

Steering devices are know which are of manually operated type and other devices of power-assisted type are also known. In steering devices of the latter type, the steering force is reduced or assisted by the application of power. Power assisted steering devices can further be grouped into electric and hydraulic types.

The electric type of power steering device, as compared with the hydraulic type does not require an oil pump as a power source. Such an oil pump is normally directly connected to the engine and affects the engine output and therefore electric power sources have various merits in that they do not detract from the engine power output, that there is no possibility of leakage, contamination, deterioration or the like of the hydraulic operating oil and maintenance is easy because such operating oil is not used, that hydraulic piping is not necessary and instead, electric wiring is only required and thus assembly is easy, and that an inexpensive system can be expected because a highly accurate and delicate device such as an oil pressure control valve is not necessary.

Various electrically operated power assisted steering arrangements are known in the art. JP-A-5547963 for example discloses a power assisted steering arrangement wherein power assistance is by means of an electric motor which drives gears through a centrifugal clutch. A ball, screw and nut arrangement transmits the force from the motor to a member which causes turning movement of the vehicle wheels. The electric motor, the clutch, the gears and the ball, screw and nut arrangement are all pivotally mounted as a unit. EP-A-0101579, which belongs to the state of the art under the provisions of Article 54(3)EPC for all countries designated in the present application with the exception of Belgium, discloses an electrically operated power assisted steering apparatus having an elongate axially movable steering member coupled with a steering wheel by means of rack and pinion gearing, the rack being formed on the elongate steering member, and having a steering assisting electric motor coupled to the elongate steering member by means of a ball, screw and nut arrangement. The operation of the electric motor is determined by a torque transducer which senses torque in the steering column of a vehicle when the steering wheel is turned. The ball, screw and nut arrangement provides a low friction coupling between the electric motor and the elongate steering member and the rack and pinion gearing provides a direct coupling between the steering column and the elongate steering member which is effective for steering the vehicle even in the event of failure of the power assistance.

Other prior art disclosures of electrically powered steering arrangements for vehicles are contained in US-A-1231885, US-A-2587377, US-A-3983953, US-A-4223254, GB-A-1395954, DE-A-2363080, DE-A-3402332, and JP-A-5544013 for example. It is not believed that any of these prior art arrangements have seen any significant commercial exploitation.

As considered in relation to the abovementioned prior art documents with the exception of EP-A-0101579, the present invention provides a power assisted steering assembly for vehicles comprising a rotary electric motor, transducer means for association with a driver-operable steering control for sensing a steering force applied thereto and providing a corresponding output signal, motor control means responsive to the output of said transducer means for determining the provision of a steering assisting output from said motor, and rotation-to-translation converting means associated with the output of said motor for translationally moving a steering member with power assistance from the motor, said rotation-to-translation converting means being associated with an elongate steering member which is movable axially in opposite directions for steering the vehicle by virtue of a mechanical coupling being provided between said elongate steering member and said driver-operable steering control and comprising a ball, screw and nut arrangement for coupling the motor to said elongate steering member, the motor being arranged for driving the nut of said ball, screw and nut arrangement thereby assisting axial movement of said elongate steering member by virtue of the application of a driving force through the balls of the ball, screw and nut arrangements to a screw thread formed on said elongate member. As considered in relation to all of the abovementioned prior art documents including EP-A-0101579, the present invention provides such a power assisted steering assembly wherein the motor is axially or transversely spaced apart from the ball, screw and nut arrangement with respect to the axial direction of said elongate steering member.

As will be appreciated from consideration of the following the present invention provides an electric type of power assisted steering device which, at least as regards the described embodiments, can be easily incorporated into a limited space within an automotive vehicle, the device comprising an electric motor portion and a movement converting ball, screw and nut mechanism, for converting the rotational movement of the motor into rectilinear movement of the steering member, which are made into units, respectively, and can be easily incorporated into an allowed space within an automotive vehicle.

The above and further features of the present invention are set forth in the appended claims and will become fully apparent from consideration of the following detailed description of exemplary embodiments which are illustrated in the accompanying drawings, wherein:

Figure 1 shows a system incorporating an embodiment of an electric power assisted steering device according to the present invention;

Figure 2 is a cross-sectional view showing the embodiment of Figure 1 in more detail;

Figure 3 is an enlarged cross-sectional view of essential portions of the embodiment of Figure 1;

Figure 4 is a cross-sectional view of a rack bushing portion of the embodiment of Figure 1;

Figure 5 is a cross-sectional view showing essential portions of a modification of the Figure 1 embodiment;

Figure 6 is a view similar to Figure 1 but showing an in-line embodiment of the invention; and

Figure 7 is a cross-sectional view of the embodiment of Figure 6.

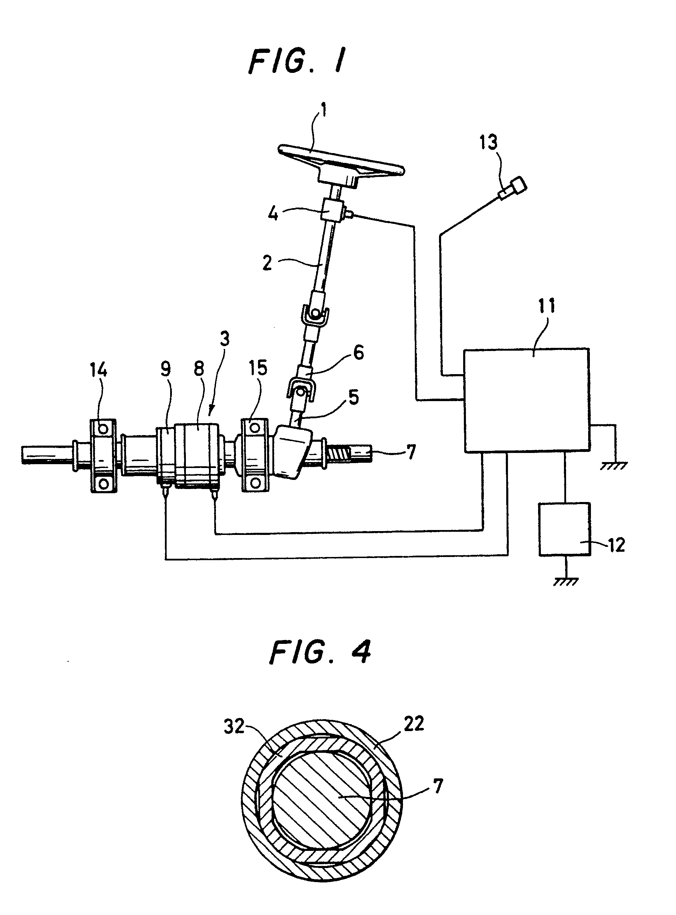

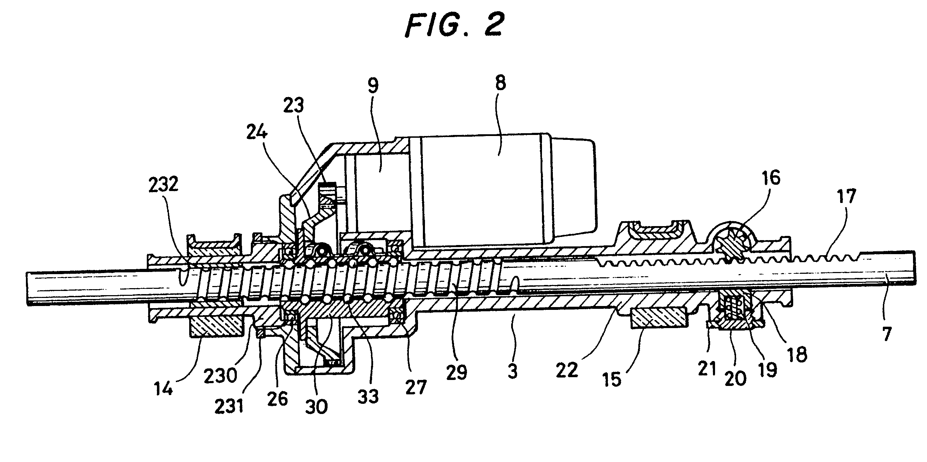

Referring to Figure 1 which shows a steering device for a vehicle provided with an electrical power assist steering mechanism according to the present invention, reference numeral 1 designates a steering wheel and reference numeral 2 denotes a steering shaft to which the steering wheel is secured. The steering shaft 2 is connected to a pinion shaft 5 through a universal joint 6. The pinion shaft 5 has a pinion gear 16 (see Figure 2) at the end thereof, the pinion gear 16 meshing with a rack 17 formed on an elongated power transmitting member 7 leftwardly and rightwardly movably provided on a steering device body 3 which will later be described.

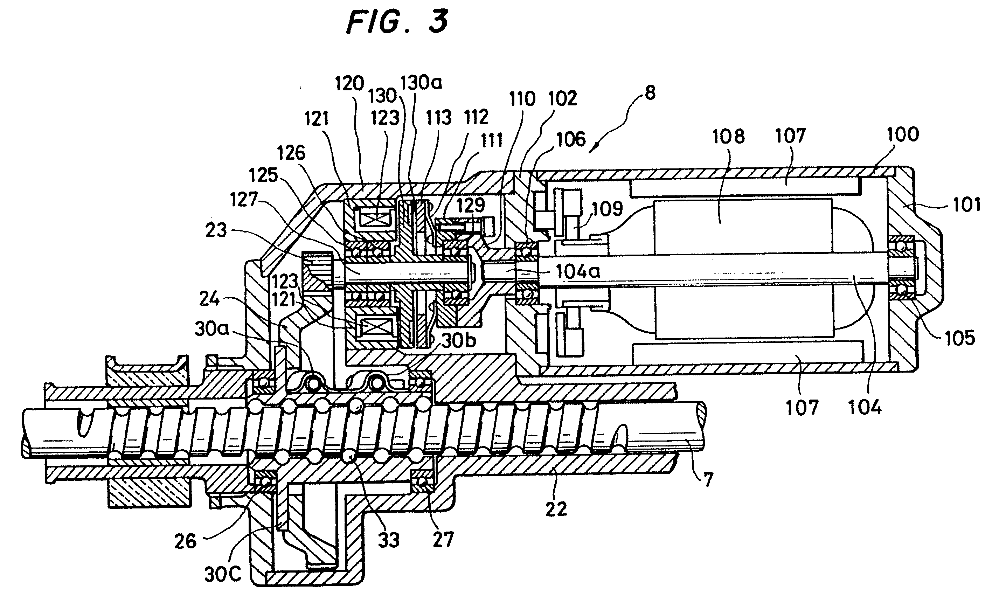

The steering device body 3 which is a motion converting mechanism unit for converting a steering rotation input into a rectilinear movement for pivoting of the dirigible wheels of the vehicle is provided with a power assisting motor unit 8 as a separate member. The rotation output from the motor unit 8 drives the power transmitting member 7 through rotation transmitting means including electromagnetic clutch means 9, and the mechanism from transmitting rotation from the motor unit to the power transmitting member 7 will later be described in detail by reference to Figures 2 and 3.

The steering shaft 2 is provided with a torque detector 4 for detecting the torque applied to the steering wheel, and the output of the torque detector 4 is connected to a control circuit 11. The control circuit 11 in turn may be connected to other input sources such as a vehicle speed detector 13 as required. Designated by 12 is an electric power source. The control circuit 11 is connected to the electric motor unit 8 and the electromagnetic clutch 9 and controls the electric motor unit 8 and the electromagnetic clutch 9 on the basis of the information of the torque applied to the steering shaft and/or the vehicle speed, but this control circuit is not directly related to the present invention ond therefore need not be described in detail. Generally, the body 3 is fixed to the vehicle by brackets 14 and 15. Ball joints (not shown) are mounted at the opposite ends of the power transmitting member 7 and are connected to dirigible wheels (not shown) through knuckle arms or the like in a known manner.

The body 3 of the electric type power assisting steering mechanism which is an embodiment of the present invention will now be described in detail by reference particularly to Figures 2 and 3.

As previously described, reference numeral 16 designates the pinion gear formed on the pinion shaft 5 and reference numeral 17 denotes the rack gear having rectilinear teeth formed on the power transmitting member 7. Reference numeral 18 designates a pressure pad subjected to a load in the radial direction of the power transmitting member 7, i.e., the direction perpendicular to the lengthwise direction thereof, reference numeral 19 denotes a spring which imparts a meshing pre-pressure to the helical pinion gear 16 and the rack gear 17 through the pad 18, reference numeral 20 designates a lid member which can adjust the meshing pre-pressure, reference numeral 21 denotes a locking nut for fixing the lid member 20, and reference numeral 22 designates a housing member.

On the other hand, a worm 29 is formed on another location on the power transmitting member, and a ball nut 30 surrounding a part of the worm 29 is provided. In the case of the present embodiment, the ball nut 30 is provided with two ball circulation paths 30a and 30b, and a number of balls 33 (only one of which is shown) are disposed to be circulated in these ball circulation paths 30a, 30b and between the ball nut 30 and the worm groove corresponding thereto and thus, the worm 29, the ball nut 30 and the balls 33 together constitute ball screw and nut means known per se as disclosed in U.S. Patent No. 2,380,662.

The ball nut 30 has its opposite ends rotatably supported on the housing 22 by ball bearings 26 and 27. The ball nut 30 has a flange 30c to which a gear 24 is secured. The gear 24 is in mesh engagement with a pinion gear 23 for taking out the rotation output of the electric motor unit 8 through the electromagnetic clutch 9 (which will later be described). The gears 23 and 24 together constitute rotation transmitting means for transmitting the rotation output of the electric motor unit 8 to the ball nut 30 at a predetermined reduction gear ratio. Thus, in response to the forward or reverse rotation output of the motor unit 8, the ball nut 30 also rotates in the forward or reverse direction and in response to this rotation of the ball nut 30, the power transmitting member 7 rectinearly moves rightwardly or leftwardly.

Reference numeral 230 designates a lid member for imparting a pre-pressure to the bearings 26 and 27, reference numearl 231 denotes a locking nut for fixing the lid member 230, and reference numeral 232 designates a rack bushing for receiving the load in the radial direction of the rack shaft 7 as will later be described.

The construction of the motor unit 8 and the electromagnetic clutch 9 will now be described in detail by reference particularly to Figure 3.

The motor unit 8 has a housing comprised of a cylindrical housing body 100 and opposite side members 101, 102 secured thereto. A stator 107 is provided on the inner peripheral portion of the housing body 100. A rotary shaft 104 is rotatably but axially immovably supported at the centers of the opposite side members 101 and 102 by bearings 105 and 106. A rotor 108 is provided on the motor shaft 104 in radially facing relationship with the motor stator 107. The rotor 108 is provided with an electromagnetic coil and is supplied with an electric power from the control circuit 11 through brushes 109, but the motor itself is of a conventional structure and need not be described in detail.

In the case of the present embodiment, the motor unit 8 is so disposed above the rack 17 that the rotary shaft 104 is substantially parallel to the power transmitting member 7. The motor unit 8 or the rotary shaft 104 may be disposed at any desired position about the power transmitting member 7 or in suitably inclined relationship with respect to the power transmitting member 7 in accordance with the space in the vehicle in which the present steering device is installed, or may be provided oppositely in direction to the case of the present embodiment. In such a case, the rotation transmitting means for transmitting the motor output to the ball nut 30 is suitably modified.

The rotary shaft 104 of the motor has a portion 104a outwardly projecting through the side member 102 of the housing, and a conical member 110 is secured to the portion 104a. The conical member 110 has a ring member 111 secured to the enlarged end portion thereof. A plate spring 112 is secured to the side surface of the ring member 111, and a rotation transmitting plate 113 formed of a magnetic material is secured to the plate spring 112.

On the other hand, a clutch housing 120 is secured to the aforementioned steering mechanism housing 22 and the motor housing side plate 102, and a support ring 121 is secured to a portion of the inner peripheral surface of the clutch housing 120. An annular electromagnetic coil 123 is disposed on the support ring 121. The electromagnetic coil 123 is connected to the control circuit 11 (Figure 1) and is ON-OFF-controlled by the control circuit 11. A shaft 127 is rotatably supported in the inner peripheral surface of the support ring 121 through ball bearings 125 and 126. That end portion of this shaft 127 which is adjacent to the motor is supported by the aforementioned conical member 110 and ring member 111 through a ball bearing 129. A friction disk 130 is secured to the shaft 127. A friction lining 130a or the like is suitably provided on that side of the friction disk 130 which faces the rotation transmitting member 113. The aforementioned pinion gear 23 is secured to the opposite end portion of the shaft 127.

With such a construction, the rotation transmitting member 113 is normally biased to the right as viewed in Fgiure 3 by the action of the plate spring 112 and is in non-engagement with the friction disk 113, but when the electromagnetic coil 123 is energized, the rotation transmitting member 113 is attracted leftwardly toward the electromagnetic coil 123 as viewed in Figure 3 with a result that the rotation transmitting member 113 comes into frictional engagement with the friction disk 130 and becomes capable of transmitting the rotation output of the motor to the shaft 127 and the pinion gear 23.

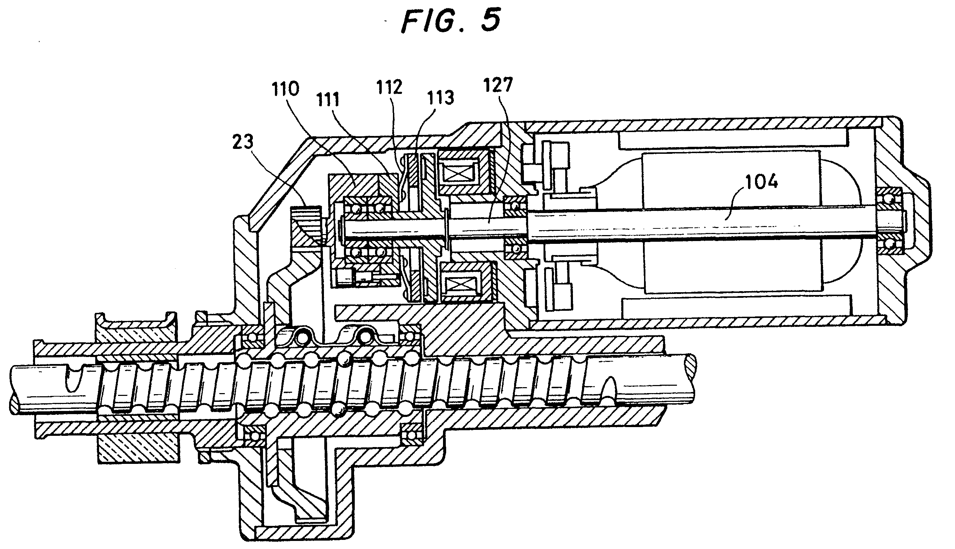

As shown in Figure 5, the rotation transmitting plate 113 axially movable by the action of the electromagnetic coil, the plate spring 112 and the members 110, 111 may be connected to the pinion gear 23 and the axially immovable friction disk 130 and the shaft 127 may be mounted on the rotary shaft 104 of the motor.

In the above-described construction, the rack gear 17 and the worm 29 of the ball screw are formed at discrete locations on the power transmitting member 7. The pinion gear 16 is in mesh engagement with the rack gear 17 to transmit rotation of the steering wheel 1 in the lengthwise direction of the power transmitting member 7 and also cooperates with the pressure pad 18 to prevent the power transmitting member 7 from rotating about the lengthwisely central axis thereof. On the other hand, the nut 30 of the ball screw is supported by the bearings 26 and 27 through the balls 33 so as to be rotatable relative to the housing member 22 and is combined with the worm 29. The reduction gear 24 is formed integrally with the nut 30, and this gear 24 meshes with the pinion gear 23 to transmit the output of the electric motor unit 8 disposed parallel to the axis of the power transmitting member 7 to the reduction gear 24 through the clutch 9 and convert the rotation output of the electric motor unit 8 into a movement in the lengthwise direction of the power transmitting member 7.

The control circuit 11 receives from the torque detector 4 and/or the vehicle speed detector 13 electrical signals corresponding to the then steering wheel shaft torque and vehicle speed, respectively, processes these signals in a predetermined manner and outputs control signals to the electric motor unit 8 and the clutch 9. Thus, the electric motor unit 8 is controlled so that change-over between manual steering and power steering is effected by the clutch 9 being suitably disengaged or engaged and that a suitable output is obtained in conformity with the torque and vehicle speed detected during the power steering.

For example, during the low speed running in which the steering power is heaviest, the clutch 9 can be engaged to control the electric motor unit 8 so that an output corresponding to the detected torque is obtained and the steering power applied to the steering wheel 1 is reduced by an amount corresponding to the output of the motor unit 8, and during the high speed running in which the steering power is light and a more direct steering sense is required, the clutch 9 can be disengaged to provide manual steering and further, during the power assist steering, the output of the electric motor unit 8 can be controlled with the vehicle speed and the angle of steering being also taken into account.

Also, to secure the fail-safe, it is necessary to disengage the clutch 9 by the control circuit 11 so as to ensure manual steering to take place when abnormality occurs.

Operation will hereinafter be described.

When the clutch is not in its operative condition, the output shaft of the electric motor unit 8 and the shaft of the pinion gear 23 of speed reduction means are separated from each other. When the steering wheel 1 is operated in this state, the rotation thereof is converted into a movement in the axial direction of the power transmitting member 7 by the mesh engagement between the pinion gear 16 and the rack gear 17, and the direction of the dirigible wheels is determined through a ball joint and a knuckle arm, not shown. This operation is the same as that of the popular manual rack and pinion type steering device.

When the clutch 9 is in its operative condition, the output shaft of the electric motor unit 8 and the shaft of the pinion gear 23 of speed reduction means are coupled together. When the steering wheel 1 is operated in this state, the steering wheel shaft torque corresponding to the load which the power transmitting member 7 receives from outside is detected by the torque detector 4 and is transmitted to the control circuit 11. Also, from the vehicle speed detector 13, the vehicle speed is transmitted to the control circuit 11. As previously described, the output of the electric motor unit 8 is controlled with a predetermined characteristic on the basis of these signals, and this output is transmitted to the power transmitting member 7 highly efficiently and at a great reduction gear ratio through the pinion gear 23, the reduction gear 24 and the ball screws 30, 33, 29.

Figure 4 exaggeratingly illustrates an example of the bushing 32 which receives the load in the radial direction of the power transmitting member used in this electric type power assist steering device. The radial load on the side of the ball screw and nut means of the power transmitting member 7 is basically received by the bearings 26 and 27 through the ball screw portion, but as a countermeasure for bad road running or the like, it is desirable that the bushing 32 as shown in Figure 4 be formed by the use of an elastic material such as resin and in a range in which the radial load is small, the elastic deformability of the bushing be set to a great value so that almost all of the load is received by the bearings 26 and 27 through the ball screw and nut portion and when the amount of elastic deformation of the ball screw and nut portion and bearings 26 and 27 increases with the load exceeding a certain set value, the bushing 32 comes into contact with the housing 22 so as to directly receive a radial load exceeding a predetermined value. Besides the above-described effect, this rack bushing 32 only contacts the power transmitting member 7 at several points in a normal range of steering in which the radial load is small, by being combined with the ball screw and nut means, and therefore the friction resulting from the axial movement of the power transmitting member 7 by the ball screws and nut means is small and light steering is possible and when a great radial load acts on the bushing from outside, the bushing 32 is deformed to increase the surface pressure of the surface contacting the power transmitting member 7, whereby friction is increased to prevent kickback and enhance the steering sense.

In the above-described embodiment, an actuator adopting ball screw and nut means is combined with the rack and pinion type steering device, and this eliminates the necessity of discretely providing a mechanism for preventing rotation of the worm 29 formed on the power transmitting member 7 which is indispensable in a ball screw and nut type direct-acting actuator.

Also, the reduction gear 24 is formed integrally with the nut 30 and is connected to the clutch 9 and the electric motor unit 8 through the pinion gear 23 which is in mesh engagement with the reduction gear 24 and therefore, the great reduction gear ratio which can also be obtained only by the ball and nut means screws can be made further greater so as to enable a compact, light-weight, highly efficient electric motor to be used and also enable the electric motor unit 8 and the clutch 9 to be mounted in parallelism along the power transmitting member 7, and this is very advantageous in terms of the space for mounting the electric motor unit 8 and the clutch 9.

Further, the reduction gear 24 formed integrally with the nut 30 can be made into a helical gear of resin, thereby reducing the inertia efficiency and enhancing the responsiveness of the steering and also decreasing gear noise.

Now, in the above-described embodiment, the torque detector 4 may be any of conventional ones using a strain gauge or magnetic strain and may also be installed on the pinion shaft 5. Also, the above-described embodiment adopts a form in which the opposite ends of the power transmitting member 7 which is output shaft means are connected to the dirigible wheels through a ball joint, a knuckle arm, eto., but the present invention is also applicable to a so-called center take-off type device in which the central portion of the output shaft means is connected to the dirigible wheels.

According to the embodiments described above, the output of the electric motor is transmitted through the reduction gear means and ball screw and nut means and this leads to a simple, compact and highly efficient structure and permits the use of s versatile electric motor generally having high speed and low torque characteristics.

Further, according to the embodiments, the dirigible device portion including ball screw and nut means and a rack and pinion and the power assisting means by the motor are made into separate units, respectively, and therefore, even if the disposition of the motor is limited by the shape of the engine crank case, the differential gear case or the like of the automotive vehicle, it is possible to mount the motor in a location where there is a space and thus, it becomes possible to apply the electrical power assist steering device to small automotive vehicles.

Furthermore, according to the embodiments, there is provided an electric type steering device in which the influence of the magnetism and heating of the power assisting electric motor portion is not imparted to the mechanism for converting a rotational movement into a rectilinear movement.

Still further, according to the embodiments, there is provided an electric type steering device in which when the assisting power from the motor is being intercepted, the connection between the motor and the aforementioned converting mechanism is completely shut off to minimize the steering wheel torque and provide good return of the steering wheel.

Furthermore, a power assisting electric motor and a mechanism for converting rotation to linear movement including rack and pinion gear means and ball screw and nut means, are made into separate units so that the electric motor unit may be disposed at a desired location, and therefore the electric type steering devices of the above embodiments can be assembled in various cars with no modification of the engine crank case as well as the differential gear case.

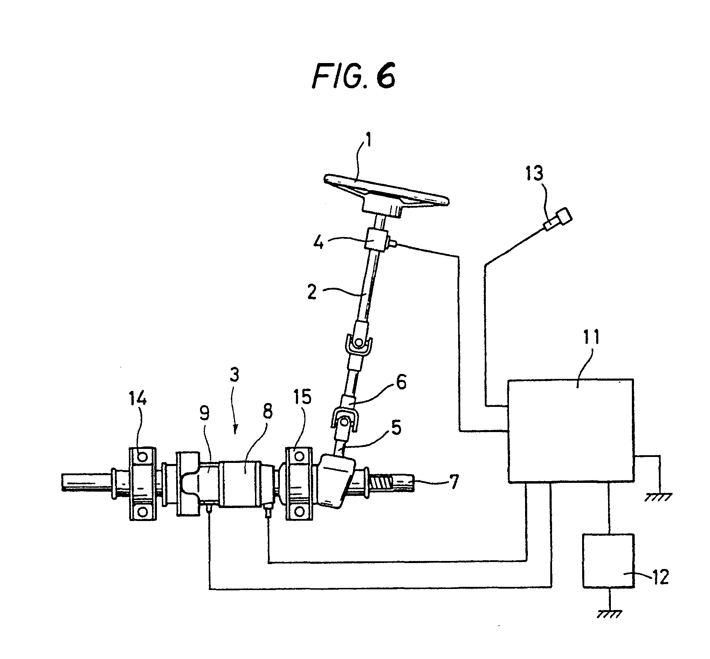

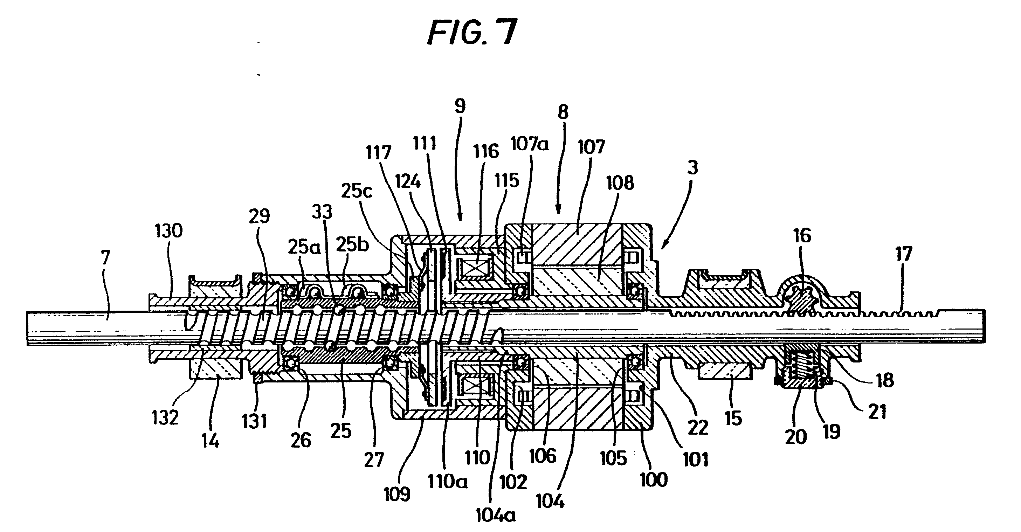

Referring now to Figures 6 and 7 which show a steering device for automotive vehicle provided with an in-line electric type power assist steering mechanism according to the present invention, reference numeral 1 designates a steering wheel and reference numeral 2 denotes a steering shaft to which the steering wheel is secured. The steering shaft 2 is connected to a pinion shaft 5 through a universal joint 6. The pinion shaft 5 has a pinion gear 16 (see Figure 7) at the end thereof, and the pinion gear 16 is in mesh engagement with a rack 17 formed in an elongated power transmitting member 7 provided for movement to the left and right on a steering device body portion 3 which will later be described.

A power assisting motor unit 8 is provided on the steering device body portion 3 which is a movement converting mechanism for converting the rotational input for steering into a rectilinear movement for pivoting of the dirigible wheels of the vehicle. The rotational output from the motor unit 8 drives the power transmitting member 7 through rotation transmitting means including electromagnetic clutch means 9, and the rotation tranmitting means from the motor unit to the power transmitting member 7 will later be described in detail.

The steering shaft 2 is provided with a torque detector 4 for detecting the torque applied to the steering wheel, and the output of the torque detector 4 is connected to a control circuit 11. The control circuit 11 in turn may be connected to other input source such as a vehicle speed detector 13 as required. Designated by 12 is an electric power source. The control circuit 11 is connected to the electric motor unit 8 and the electromagnetic clutch 9 and controls the electric motor unit 8 and the electromagnetic clutch 9 on the basis of the torque applied to the steering shaft and/or information such as vehicle speed, but this control circuit is not directly related to the present invention and therefore need not be described in detail. Generally, the body 3 is fixed to the vehicle by brackets 14 and 15. Ball joints (not shown) are mounted on the opposite ends of the power transmitting member 7 and are connected to the dirigible wheel (not shown) through a knuckle arm or the like in a known manner.

Reference is now had particularly to Figure 7 to describe the electric type power assist steering mechanism which is an embodiment of the present invention.

As previously described, reference numeral 16 designates the pinion gear formed on the pinion shaft 5 and reference numeral 17 denotes the rack gear having rectilinear teeth formed on the power transmitting member 7. Reference numeral 18 designates a pressure pad subjected to the load in the radial direction of the power transmitting member 7, i.e., the direction perpendicular to the lengthwise direction, reference numeral 19 denotes a spring for imparting a meshing pre-pressure to the helical pinion gear 16 and the rack gear 17 through the pad 18, reference numeral 20 designates a lid member for enabling the meshing pre-pressure to be adjusted, reference numeral 21 denotes a locking nut for fixing the lid member 20, and reference numeral 22 designates a housing member.

On the other hand, a worm 29 is formed at the other location on the power transmitting member 7, and a ball nut 25 is provided which surrounds a part of the worm 29. In the case of the present embodiment, the ball nut 25 is provided with two ball circulation paths 25a and 25b, and a number of balls 33 (only one of which is shown) in these circulation paths 25a and 25b and between the ball nut 25 and the worm groove corresponding thereto and thus, the worm 29, the ball nut 25 and the balls 33 together constitute ball screw and nut means known per se as is disclosed in U.S. Patent No. 2,380,662.

The ball nut 25 has its opposite ends rotatably supported on a housing 30 by ball bearings 26 and 27. Reference numeral 130 designates a lid member for imparting a pre-pressure to the bearings 26 and 27, reference numeral 131 denotes a lock nut for adjusting the lid member 130, and reference numeral 132 designates a rack bushing subjected to the load in the radial direction of the power transmitting member 7.

The motor unit 8 has a housing comprising a cylindrical housing body 100 and opposite side members 101 and 102 secured thereto. In the present embodiment, the right side member 101 is formed integrally with the housing 22 of rack and pinion gear means, but alternatively the former may be separate from the latter.

A stator 107 is provided on the inner peripheral portion of the housing member 100. A rotary shaft 104 is rotatably but axially immovably supported at the central portions of the opposite side members 101 and 102 by bearings 105 and 106. A rotor 108 is secured to the rotary shaft 104 in radially facing relationship with the motor stator 107. An electromagnetic coil 107a is provided on the motor stator and is supplied with electric power from the control circuit 11 shown in Figure 6, but the construction of the motor itself is conventional and therefore need not be described in detail herein.

The rotary shaft 104 of the motor is in the form of a hollow cylinder and the power transmitting member 7 extends through the interior thereof. Thus, the motor structure comprising the housings 100, 101, 102, the stator 107, the rotor 108 and the rotary shaft 104 is arranged coaxially with the power transmitting member 7. The rotary shaft 104 of the motor has a portion 104a extending through the housing side member 102 and projecting into a clutch housing 109 which will later be described.

The clutch housing 109 is a cylindrical member secured at one end thereof to the motor housing side plate 102 and at the other end thereof to the housing 30 of the ball screw and nut means.

A cylindrical member 110 is secured to the portion 104a of the rotary shaft 104 of the motor which projects into the clutch housing, and a friction disc 110a is radially formed integrally with the end portion of the cylindrical member 110. The friction disc 110a is provided with a friction lining 111.

A support ring 115 is secured to a portion of the inner peripheral surface of the clutch housing 109 which is adjacent to the motor. An annular electromagnetic coil 116 is disposed on the support ring 115. The electromagnetic coil 116 is connected to the control circuit 11 (Figure 6) and is ON-OFF-controlled by the control circuit 11.

On the other hand, a flange member 25c secured to the nut member 25 of the aforementioned ball screw and nut means is within the clutch housing 109. A rotation transmitted friction disc 124 is secured to the flange member 25c through a radially outwardly extending plate spring 117. The friction disc 124 is formed of a magnetic material and has a surface opposed to the friction lining 111 of the aforementioned friction disc 110a, and is normally biased to the left as viewed in Figure 7 by the action of the plate spring 117, and the friction transmitted member 124 is normally out of engagement with the friction disc 110a, but when the electromagnetic coil 116 is energized, the friction transmitted member 124 is attracted to the electromagnetic coil 116 rightwardly as viewed in Figure 7 and as a result, the friction transmitted member 124 comes into frictional engagement with the friction disc 110a to thereby become capable of transmitting the rotation output of the motor to the nut 25.

In the above-described construction, the rack gear 17 of the rack and pinion gear means and the worm 29 of the ball screw and nut means are formed at different locations on the power transmitting member 7. The pinion gear 16 is in mesh engagement with the rack gear 17 to convert the rotation of the steering wheel 1 into a linear movement of the power transmitting member 7 and also cooperates with the pressure pad 18 to prevent the power transmitting member 7 from rotating about the lengthwise center axis thereof. On the other hand, the nut 25 of the ball screw and nut means is supported by the bearings 26 and 27 through the balls 33 so as to be rotatable relative to the housing member 30 and is combined with the worm 29. The friction plate 124 is mounted on the flange member 25c secured to the nut 25, through the plate spring 117 and, when the electromagnetic coil 116 is ON or energized, this friction plate 124 meshes with the other friction member 111 against the force of the plate spring 117, and thereby the output shaft 104 of the electric motor spline-coupled to the tubular portion 110 which is integral with the flange member 110a having the friction member 111 is drivingly connected to the nut 25. When the coil 116 is OFF or deenergized, the friction plate 124 is pulled toward the nut 25 by the plate spring 117 and the two friction plates 111 and 124 are separated from each other and thus, the output of the electric motor unit 8 is not transmitted to the nut 25. When the output of the electric motor unit 8 is transmitted, the ball screw and nut means converts the rotational output of the motor unit into the axial or linear movement of the power transmitting member 7 into the right or left direction and at this time, the power transmitting member 7 receives a reaction force which tends to rotate it, but the power transmitting member 7 is designed such that it is not rotated with the aid of the reaction forces of the portion of mesh engagement between the pinion gear 16 and the rack gear 17 and the pressure pad 18 as previously described.

The control circuit 11 receives as inputs from the torque detector 4 and the vehicle speed detector 13 electrical signals corresponding to the steering shaft torque and vehicle speed, respectively, and processes these signals in a predetermined manner and puts out control signals to the electric motor unit 8 and the electromagnetic clutch 9. Thus, by suitably engaging or disengaging the electromagnetic clutch 9, the electric motor unit 8 is controlled so that change-over between manual steering and power steering is effected or a suitable output is obtained in conformity with the torque and vehicle speed detected during power assist steering.

For example, during the low speed running when the steering force is heaviest, the clutch 9 may be engaged to control the electric motor unit 8 so that an output corresponding to the detected torque may be obtained, and the steering force applied to the steering wheel 1 may be reduced by an amount corresponding to such output, or when the steering force is light and a more direct steering sense is required as during the high speed running, the electromagnetic clutch 9 may be disengaged and manual steering may be adopted and further, during power assist steering, the output of the electric motor unit 8 may be controlled with the vehicle speed and the angle of steering taken into account.

Also, to secure the fail-safe, it is necessary to disengage the electromagnetic clutch 9 by the control circuit 11 so that manual steering may be adopted whenever abnormality occurs.

Operation will hereinafter be described.

When the electromagnetic clutch 9 is disengaged or not in its operative condition, the output shaft 104 of the electric motor unit 8 and the nut 25 are separated from each other. When the steering wheel 1 is operated in this condition, the rotation thereof is converted into the axial or rectilinear movement of the power transmitting member 7 by the mesh engagement between the pinion gear 16 and the rack gear 17 and determines the direction of the dirigible wheels through a ball joint and a knuckle arm, not shown. This operation is the same as the operation of the popular manually operated rack and pinion type steering device.

When the electromagnetic clutch 9 is engaged or in its operative condition, the output shaft 104 of the electric motor unit 8 and the nut 25 are coupled together. When the steering wheel 1 is operated in this condition, the steering shaft torque corresponding to the load which the power transmitting member 7 receives from the outside is detected by the torque detector 4 and is transmitted to the control circuit 11, and the vehicle speed is also transmitted from the vehicle speed detector 13 to the control circuit 11. As previously described, on the basis of these signals, the output of the electric motor unit 8 is controlled with a predetermined characteristic, and this output is transmitted to the power transmitting member 7 through the ball screw and nut means 25, 33, 29 at high efficiency and reduction gear ratio.

A bushing 32 as shown in Figure 4 may be provided to receive the load in the radial direction of the power transmitting member 7. The radial load on the ball screw and nut means side of the power transmitting member 7 is basically received by the bearings 26 and 27 through the ball screw and nut means, but as a countermeasure for the running on a bad road, it is desirable that the bushing 32 as shown in Figure 4 be formed by the use of an elastic material such as resin and in a small range of radial load, the elastic deformability of the bushing be set to a great value so that almost all of the load is received by the bearings 26 and 27 through the ball screw and nut means and the bushing 32 be designed to contact the housing 22 and directly receive a radial load exceeding a predetermined value when the load exceeds a certain set value and the amount of deformation of the ball screw and nut means and the bearings 26, 27 is increased. In addition to the above-described effect, this rack bushing 32 contacts the power transmitting member 7 only at several points in the normal range of steering in which the radial load is small, by being combined with the ball screw and nut means and therefore, the friction resulting from the axial or rectilinear movement of the power transmitting member 7 by the ball screw and nut means is small and thus, light steering is possible and when a great radial load acts from the outside, the bushing 32 is deformed and the surface pressure of the surface which is in contact with the power transmitting member 7 is increased, whereby the friction is increased to prevent kick back and improve the steering sense.

A gear type speed reduction device or the like is not used between the electric motor unit 8 and the nut 25, and this leads to a simple structure of high efficiency (low friction loss) and low noise, which in turn leads to compactness and light weight of the device.

Now, in the above-described embodiment, the torque detector 4 may be any conventional one using a strain gauge or magnetic strain and may be installed on the pinion shaft 5. Also, the above-described embodiment adopts a form in which the opposite ends of the power transmitting member 7 which is output shaft means are connected to the dirigible wheels through a ball joint, a knuckle arm, etc., but the present invention is also applicable to the so-called center take-off type one in which the central portion of the output shaft means is connected to the dirigible wheels.

According to the last embodiment, as described above, a ball screw and nut means type actuator is combined with the rack and pinion gear type steering device and this eliminates the necessity of separately providing a mechanism for preventing rotation of the worm 29 formed on the power transmitting member 7 which is indispensable to a ball screw and nut means type direct-acting actuator. The output of the power assisting electric motor is transmitted through the ball screw and nut means, and this leads to a simple, compact structure of high efficiency having an effect similar to that obtained when a reduction gear is employed and thus, it is generally made realistic from the viewpoints of space, efficiency, etc. to use an electric motor having characteristics such as high speed and low torque in a power assist steering device.

According to the above described embodiments of the present invention, the ball screw and nut means, the dirigible device portion including the rack and pinion gear means and the power assisting means using the motor are made into units, respectively, and therefore there can be provided an electric type power assist steering device which is easy to assemble.

Further, according to the above described embodiments of the present invention, there is provided an electric type power assist steering device in which the influence of the magnetism and heating of the power assisting electric motor portion is not imparted to the ball screw and nut means.

Furthermore, according to the above described embodiments of the present invention, there is provided an electric type steering device in which when the assisting power from the motor is being intercepted, the connection between the motor and the converting mechanism is completely shut off to thereby minimize the steering wheel torque and ensure good return of the steering wheel.

## Claims

1. A power assisted steering asembly for vehicles comprising a rotary electric motor (8), transducer means (4) for association with a driver-operable steering control (1) for sensing a steering force applied thereto and providing a corresponding output signal, motor control means (11) responsive to the output of said transducer means for determining the provision of a steering assisting output from said motor, and rotation-to-translation converting means (33,29,30) associated with the output of said motor (8) for translationally moving a steering member (7) with power assistance from the motor, said rotation-to-translation converting means being associated with an elongate steering member (7) which is movable axially in opposite directions for steering the vehicle by virtue of a mechanical coupling (16,17) being provided between said elongate steering member (7) and said driver-operable steering control (1) and comprising a ball, screw and nut arrangement (33,29,30) for coupling the motor (8) to said elongate steering member (7), the motor (8) being arranged for driving the nut (30) of said ball, screw and nut arrangement (33,29,30) thereby assisting axial movement of said elongate steering member (7) by virtue of the application of a driving force through the balls (33) of the ball, screw and nut arrangements (33,29,30) to a screw thread (29) formed on said elongate member (7), and the motor (8) being axially or transversely spaced apart from the ball, screw and nut arrangement (33,29,30) with respect to the axial direction of said elongate steering member (7).

2. A power assisted steering assembly as claimed in claim 1 wherein said driver-operable steering control (1) comprises a rotary shaft (2) connected to a steering wheel (1) to be rotated therewith and said mechanical coupling provided between said elongate steering member (7) and said driver-operable steering control comprises a pinion gear (16) rotatable with said rotary shaft (2) and a rack gear (17) provided on said elongate steering member (7) and disposed in meshing engagement with said pinion gear (16).

3. A power assisted steering assembly as claimed in claim 1 or 2 wherein said ball, screw and nut arrangement (33,29,30) comprises an external screw thread (29) formed on a portion of said elongate steering member (7), an internal screw thread formed on a rotatable nut (30) circumscribing said elongate steering member (7) and facing said external screw thread (29) formed on the elongate steering member (7), and a plurality of friction-reducing balls (33) disposed in engagement with said internal and external screw threads for transmitting rotation of said rotatable nut (30) under the action of said electric motor (8) into axial translation of said elongate steering member (7).

4. A power assisted steering assembly as claimed in any of the preceding claims including gearing (23,24) provided between the output of said electric motor (8) and said rotation-to-translation converting means (33,29,30).

5. A power assisted steering assembly as claimed in claim 4 wherein said gearing (23,24) comprises reduction gearing.

6. A power assisted steering assembly as claimed in any of the preceding claims wherein a selectively-operable clutch (9) is provided between the output of said electric motor 8 and said rotation-to-translation converting means (33,29,30), and control means (11) are provided for selectively determining the operation of said clutch (9).

7. A power assisted steering assembly as claimed in claim 6 wherein said clutch (9) is operable between a disengaged condition in which the nut (30) of the ball, screw and nut arrangement (33,29,30) is rotatable relative to the rotor of the electric motor (8) and an engaged condition in which the nut (30) and the rotor of the motor (8) are interconnected for rotation relative to said elongate steering member (7).

8. A power assisted steering assembly as claimed in claim 6 or 7 wherein said clutch control means (11) is operable independently of said motor control means (11).

9. A power assisted steering assembly as claimed in claim 6 or 7 or 8 wherein said clutch (9) comprises an electromagnetic clutch.

10. A power assisted steering assembly as claimed in any of the preceding claims wherein the electric motor (8) is mounted in the assembly with its rotational axis offset transversely from the axis of said elongate steering member (7), and rotation transmitting means (9,23,24) is provided traversing said transverse offset for transmitting the rotation developed by the motor to the nut of the ball screw and nut arrangement.

11. A power assisted steering assembly as claimed in claim 10 wherein the axis of the motor (8) is parallel to the axis of the elongate steering member (7).

12. A power assisted steering assembly as claimed in claim 10 or 11 wherein the electric motor (8) is housed in a separate housing part of the assembly.

13. A power assisted steering assembly as claimed in any of claims 1 to 9 wherein the electric motor (8) is mounted in the assembly coaxially with the elongate steering member (7) and circumscribing the elongate steering member (7), the rotor (108) of the motor (8) comprising a hollow member which rotates about the elongate steering member (7).

14. A power assisted steering assembly as claimed in claim 13 wherein the ball, screw and nut arrangement (33,29,25) is axially spaced apart from the electric motor (8) longitudinally of the elongate steering member (7), and rotation transmitting means (9) is provided traversing the axial spacing between the electric motor (8) and the nut (25) of the ball, screw and nut arrangement (33,29,25).

15. A power assisted steering assembly as claimed in claim 14 wherein the ball, screw and nut arrangement (33,29,25) and the electric motor (8) are housed in separate housing parts of the assembly.

16. A power assisted steering assembly as claimed in claim 14 or 15 wherein the electric motor (8) is disposed between the ball, screw and nut arrangement (33,29,25) and the mechanical coupling (16,17) of the elongate steering member (7) with the driver-operable steering control (1).

17. A power assisted steering assembly as claimed in claim 1 wherein said elongate steering member (7) has a rack gear (17) provided at a first longitudinal portion of the elongate steering member (7) for meshing engagement with a pinion gear (16) arranged to be rotated by operation of said driver-operable steering control (1), such rack and pinion gears constituting said mechanical coupling provided between the elongate steering member (7) and the driver-operable steering control (1), and furthermore has an external screw thread (29) provided at a second longitudinal portion of the elongate steering member (7) spaced apart from said first rack gear portion, the nut (30) of said ball, screw and nut arrangment (33,29,30) circumscribing a portion of said externally screw threaded second portion of the elongate steering member (7) and having an internal screw thread which is coupled to said external screw thread (29) by the balls (33) of said ball, screw and nut arrangement (33,29,30) whereby rotation of the nut (30) will cause axial translation of the elongate steering member (7), the electric motor (8) being mounted with its rotational axis parallel to but spaced transversely apart from the elongate steering member (7) and having an output shaft (104) coupled through rotation transmitting means (9,23,24) to the nut (30) of the ball, screw and nut arrangement (33,29,30).

18. A power assisted steering assembly as claimed in claim 17 wherein said rotation transmitting means (9,23,24) comprises a selectively-operable electromagnetic clutch (9) and a first gear (23) arranged to be driven by the motor output shaft (104) when the clutch (9) is engaged and meshing with a second gear (24) arranged for rotating the nut (30) of the ball, screw and nut arrangement (33,29,30).

19. A power assisted steering assembly as claimed in claim 1 wherein said elongate steering member (7) has a rack gear (17) provided at a first longitudinal portion of the elongate steering member (7) for meashing engagement with a pinion gear (16) arranged to be rotated by operation of said driver-operable steering control (1), such rack and pinion gears constituting said mechanical coupling provided between the elongate steering member (7) and the driver-operable steering control (1), and furthermore has an external screw thread (29) provided at a second longitudinal portion of the elongate steering member (7) spaced apart from said first rack gear portion, the nut (25) of the ball, screw and nut arrangement (33,29,25) circumscribing a portion of said externally screw threaded second portion of the elongate steering member (7) and having an internal screw thread which is coupled to said external screw thread (29) by the balls (33) of the ball, screw and nut arrangement (33,29,25) whereby rotation of the nut (25) will cause axial translation of the elongate steering member (7), the electric motor (8) being mounted in the assembly between the location whereat the rack and pinion gears (17,16) provide mechanical coupling between the elongate steering member (7) and the driver-operable steering control (1) and the spaced-apart location of the ball, screw and nut arrangement (33,29,25) and comprising a hollow rotor (108) coaxial with said elongate steering member (7) which extends through the hollow thereof, and the rotor (108) of the electric motor (8) being coupled with the nut (25) of the ball, screw and nut arrangement (33,29,25) for rotating the same when the motor is energized.

20. A power assited steering assembly as claimed in claim 18 wherein the rotor (108) of the electric motor (8) is coupled to the nut (25) of the ball, screw and nut arrangement by rotation transmitting means including a selectively operable electromagnetic clutch (9).

21. A power assited steering assembly as claimed in claim 9 or any claim dependent thereon, or as claimed in claim 18 or claim 19, wherein said clutch (9) comprises a rotation transmitting magnetic disc (113,124) coupled to a first rotary part in an axially-movable manner, a friction disc (130,110) facing said magnetic disc (113,124) and fixedly coupled to a second rotary part, and an electromagnetic coil (123,116) arranged for electromagnetically determining the axial movement of said magnetic disc (113,124), the arrangement being such that said magnetic disc (113,124) is movable into rotation-transmitting frictional contact with said friction disc (130,110).

22. A power assisted steering asembly for vehicles comprising a rotary electric motor (8), transducer means (4) for association with a driver-operable steering control (1) for sensing a steering force applied thereto and providing a corresponding output signal, motor control means (11) responsive to the output of said transducer means for determining the provision of a steering assisting output from said motor, and rotation-to-translation converting means (33,29,30) associated with the output of said motor (8) for translationally moving a steering member (7) with power assistance from the motor, said rotation-to-translation converting means being associated with an elongate steering member (7) which is movable axially in opposite directions for steering the vehicle by virtue of a mechanical coupling (16,17) being provided between said elongate steering member (7) and said driver-operable steering control (1) and comprising a ball, screw and nut arrangement (33,29,30) for coupling the motor (8) to said elongate steering member (7), the motor (8) being arranged for driving the nut (30) of said ball, screw and nut arrangement (33,29,30) whereby to assist axial movement of said elongate steering member (7) by virtue of the application through the balls (33) of the ball, screw and nut arrangements (33,29,30) of a driving force to a screw thread (29) formed on said elongate member (7), and rotation transmitting means including gear means (23,24) being provided for transmitting rotation from the motor (8) to the nut (30) of the ball, screw and nut arrangement (33,29,30).

23. A power assisted steering assembly as claimed in claim 22 wherein a selectively-operable clutch (9) is included in said rotation transmitting means.

CLAIMS: For the Contracting State: BE

1. A power assisted steering asembly for vehicles comprising a rotary electric motor (8), transducer means (4) for association with a driver-operable steering control (1) for sensing a steering force applied thereto and providing a corresponding output signal, motor control means (11) responsive to the output of said transducer means for determining the provision of a steering assisting output from said motor, and rotation-to-translation converting means (33,29,30) associated with the output of said motor (8) for translationally moving a steering member (7) with power assistance from the motor, said rotation-to-translation converting means being associated with an elongate steering member (7) which is movable axially in opposite directions for steering the vehicle by virtue of a mechanical coupling (16,17) being provided between said elongate steering member (7) and said driver-operable steering control (1) and comprising a ball, screw and nut arrangement (33,29,30) for coupling the motor (8) to said elongate steering member (7), the motor (8) being arranged for driving the nut (30) of said ball, screw and nut arrangement (33,29,30) thereby assisting axial movement of said elongate steering member (7) by virtue of the application of a driving force through the balls (33) of the ball, screw and nut arrangements (33,29,30) to a screw thread (29) formed on said elongate member (7).

2. A power assisted steering assembly as claimed in claim 1 wherein said driver-operable steering control (1) comprises a rotary shaft (2) connected to a steering wheel (1) to be rotated therewith and said mechanical coupling provided between said elongate steering member (7) and said driver-operable steering control comprises a pinion gear (16) rotatable with said rotary shaft (2) and a rack gear (17) provided on said elongate steering member (7) and disposed in meshing engagement with said pinion gear (16).

3. A power assisted steering assembly as claimed in claim 1 or 2 wherein said ball, screw and nut arrangement (33,29,30) comprises an external screw thread (29) formed on a portion of said elongate steering member (7), an internal screw thread formed on a rotatable nut (30) circumscribing said elongate steering member (7) and facing said external screw thread (29) formed on the elongate steering member (7), and a plurality of friction-reducing balls (33) disposed in engagement with said internal and external screw threads for transmitting rotation of said rotatable nut (30) under the action of said electric motor (8) into axial translation of said elongate steering member (7).

4. A power assisted steering assembly as claimed in any of the preceding claims including gearing (23,24) provided between the output of said electric motor (8) and said rotation-to-translation converting means (33,29,30).

5. A power assisted steering assembly as claimed in claim 4 wherein said gearing (23,24) comprises reduction gearing.

6. A power assisted steering assembly as claimed in any of the preceding claims wherein a selectively-operable clutch (9) is provided between the output of said electric motor 8 and said rotation-to-translation converting means (33,29,30), and control means (11) are provided for selectively determining the operation of said clutch (9).

7. A power assisted steering assembly as claimed in claim 6 wherein said clutch (9) is operable between a disengaged condition in which the nut (30) of the ball, screw and nut arrangement (33,29,30) is rotatable relative to the rotor of the electric motor (8) and an engaged condition in which the nut (30) and the rotor of the motor (8) are interconnected for rotation relative to said elongate steering member (7).

8. A power assisted steering assembly as claimed in claim 6 or 7 wherein said clutch control means (11) is operable independently of said motor control means (11).

9. A power assisted steering assembly as claimed in claim 6 or 7 or 8 wherein said clutch (9) comprises an electromagnetic clutch.

10. A power assisted steering assembly as claimed in any of the preceding claims wherein the electric motor (8) is mounted in the assembly with its rotational axis offset transversely from the axis of said elongate steering member (7), and rotation transmitting means (9,23,24) is provided traversing said transverse offset for transmitting the rotation developed by the motor to the nut of the ball screw and nut arrangement.

11. A power assisted steering assembly as claimed in claim 10 wherein the axis of the motor (8) is parallel to the axis of the elongate steering member (7).

12. A power assisted steering assembly as claimed in claim 10 or 11 wherein the electric motor (8) is housed in a separate housing part of the assembly.

13. A power assisted steering assembly as claimed in any of claims 1 to 9 wherein the electric motor (8) is mounted in the assembly coaxially with the elongate steering member (7) and circumscribing the elongate steering member (7), the rotor (108) of the motor (8) comprising a hollow member which rotates about the elongate steering member (7).

14. A power assisted steering assembly as claimed in claim 13 wherein the ball, screw and nut arrangement (33,29,25) is axially spaced apart from the electric motor (8) longitudinally of the elongate steering member (7), and rotation transmitting means (9) is provided traversing the axial spacing between the electric motor (8) and the nut (25) of the ball, screw and nut arrangement (33,29,25).

15. A power assisted steering assembly as claimed in claim 14 wherein the ball, screw and nut arrangement (33,29,25) and the electric motor (8) are housed in separate housing parts of the assembly.

16. A power assisted steering assembly as claimed in claim 14 or 15 wherein the electric motor (8) is disposed between the ball, screw and nut arrangement (33,29,25) and the mechanical coupling (16,17) of the elongate steering member (7) with the driver-operable steering control (1).

17. A power assisted steering assembly as claimed in claim 1 wherein said elongate steering member (7) has a rack gear (17) provided at a first longitudinal portion of the elongate steering member (7) for meshing engagement with a pinion gear (16) arranged to be rotated by operation of said driver-operable steering control (1), such rack and pinion gears constituting said mechanical coupling provided between the elongate steering member (7) and the driver-operable steering control (1), and furthermore has an external screw thread (29) provided at a second longitudinal portion of the elongate steering member (7) spaced apart from said first rack gear portion, the nut (30) of said ball, screw and nut arrangment (33,29,30) circumscribing a portion of said externally screw threaded second portion of the elongate steering member (7) and having an internal screw thread which is coupled to said external screw thread (29) by the balls (33) of said ball, screw and nut arrangement (33,29,30) whereby rotation of the nut (30) will cause axial translation of the elongate steering member (7), the electric motor (8) being mounted with its rotational axis parallel to but spaced transversely apart from the elongate steering member (7) and having an output shaft (104) coupled through rotation transmitting means (9,23,24) to the nut (30) of the ball, screw and nut arrangement (33,29,30).

18. A power assisted steering assembly as claimed in claim 17 wherein said rotation transmitting means (9,23,24) comprises a selectively-operable electromagnetic clutch (9) and a first gear (23) arranged to be driven by the motor output shaft (104) when the clutch (9) is engaged and meshing with a second gear (24) arranged for rotating the nut (30) of the ball, screw and nut arrangement (33,29,30).

19. A power assisted steering assembly as claimed in claim 1 wherein said elongate steering member (7) has a rack gear (17) provided at a first longitudinal portion of the elongate steering member (7) for meashing engagement with a pinion gear (16) arranged to be rotated by operation of said driver-operable steering control (1), such rack and pinion gears constituting said mechanical coupling provided between the elongate steering member (7) and the driver-operable steering control (1), and furthermore has an external screw thread (29) provided at a second longitudinal portion of the elongate steering member (7) spaced apart from said first rack gear portion, the nut (25) of the ball, screw and nut arrangement (33,29,25) circumscribing a portion of said externally screw threaded second portion of the elongate steering member (7) and having an internal screw thread which is coupled to said external screw thread (29) by the balls (33) of the ball, screw and nut arrangement (33,29,25) whereby rotation of the nut (25) will cause axial translation of the elongate steering member (7), the electric motor (8) being mounted in the assembly between the location whereat the rack and pinion gears (17,16) provide mechanical coupling between the elongate steering member (7) and the driver-operable steering control (1) and the spaced-apart location of the ball, screw and nut arrangement (33,29,25) and comprising a hollow rotor (108) coaxial with said elongate steering member (7) which extends through the hollow thereof, and the rotor (108) of the electric motor (8) being coupled with the nut (25) of the ball, screw and nut arrangement (33,29,25) for rotating the same when the motor is energized.

20. A power assited steering assembly as claimed in claim 18 wherein the rotor (108) of the electric motor (8) is coupled to the nut (25) of the ball, screw and nut arrangement by rotation transmitting means including a selectively operable electromagnetic clutch (9).

21. A power assited steering assembly as claimed in claim 9 or any claim dependent thereon, or as claimed in claim 18 or claim 19, wherein said clutch (9) comprises a rotation transmitting magnetic disc (113,124) coupled to a first rotary part in an axially-movable manner, a friction disc (130,110) facing said magnetic disc (113,124) and fixedly coupled to a second rotary part, and an electromagnetic coil (123,116) arranged for electromagnetically determining the axial movement of said magnetic disc (113,124), the arrangement being such that said magnetic disc (113,124) is movable into rotation-transmitting frictional contact with said friction disc (130,110).

**Revendications**

1. Direction assistée pour véhicule, comprenant un moteur électrique rotatif (8) un dispositif à transducteur (4) destiné à être associé à une commande (1) de direction manoeuvrable par un conducteur et destiné à détecter une force de direction qui lui est appliquée et à donner un signal correspondant de sortie, un dispositif (11) de commande de moteur commandé par le signal de sortie du dispositif à transducteur et destiné à déterminer l'énergie d'assistance donnée par le moteur, et un dispositif de conversion d'une rotation en translation (33, 29, 30) associé à la sortie du moteur (8) et destiné à déplacer en translation un organe de direction (7) avec une assistance du moteur, le dispositif de conversion d'une rotation en translation étant associé à un organe allongé de direction (7) qui est mobile axialement en sens opposés afin qu'il dirige le véhicule, par accouplement mécanique (16, 17) formé entre l'organe allongé de direction (7) et la commande de direction (1) manoeuvrable par un conducteur et comprenant un ensemble à billes, vis et écrou (33, 29, 30) destiné à coupler le moteur (8) à l'organe allongé de direction (7), le moteur (8) étant destiné à entraîner l'écrou (30) de l'ensemble à billes, vis et écrou (33, 29, 30) afin que le déplacement axial de l'organe allongé de direction (7) soit assisté par application d'une force d'entraînement par l'intermédiaire des billes (33) de l'ensemble à billes, vis et écrou (33, 29, 30) à un filetage (29) formé sur l'organe allongé (7), et le moteur (8) étant placé axialement ou transversalement à distance de l'ensemble à billes, vis et écrou (33, 29, 30), par rapport à la direction axiale de l'organe allongé de direction (7).

2. Direction assistée selon la revendication 1, dans laquelle la commande de direction (1) manoeuvrable par un conducteur comporte une colonne rotative (2) raccordée au volant (1) afin qu'elle tourne avec lui et l'accouplement mécanique formé entre l'organe allongé de direction (7) et la commande de direction manoeuvrable par le conducteur comporte un pignon (16) qui peut tourner avec la colonne rotative (2) et une crémaillère (17) formée sur l'organe allongé de direction (7) et disposée en prise avec le pignon (16).

3. Direction assistée selon la revendication 1 ou 2, dans laquelle l'ensemble à billes, vis et écrou (33, 29, 30) comporte un filetage (29) formé sur une partie de l'organe allongé de direction (7), un taraudage formé sur un écrou rotatif (30) qui entoure l'organe allongé de direction (7) et qui est tourné vers le filetage (29) formé sur l'organe allongé de direction (7), et plusieurs billes (33) de réduction de frottement placées en coopération avec le filetage et le taraudage et destinées à transmettre la rotation de l'écrou rotatif (30), sous l'action du moteur électrique (8), sous forme d'une translation axiale de l'organe allongé de direction (7).

4. Direction assistée selon l'une quelconque des revendications précédentes, comprenant une transmission (23, 24) formée entre la sortie du moteur électrique (8) et le dispositif de conversion d'une rotation en translation (33, 29, 30).

5. Direction assistée selon la revendication 4, dans laquelle la transmission (23, 24) comprend un engrenage réducteur.

6. Direction assistée selon l'une quelconque des revendications précédentes, dans laquelle un embrayage (9) qui fonctionne sélectivement est placé entre la sortie du moteur électrique (8) et le dispositif de conversion d'une rotation en translation (33, 29, 30), et un dispositif de commande (11) est destiné à déterminer sélectivement le fonctionnement de l'embrayage (9).

7. Direction assistée selon la revendication 6, dans laquelle l'embrayage (9) travaille entre un état débrayé dans lequel l'écrou (30) de l'ensemble à billes, vis et écrou (3, 29, 30) peut tourner par rapport au rotor du moteur électrique (8), et une position embrayée dans laquelle l'écrou (30) et le rotor du moteur (8) sont interconnectés afin qu'ils tournent par rapport à l'organe allongé de direction (7).

8. Direction assistée selon la revendication 6 ou 7, dans laquelle la commande d'embrayage (11) fonctionne indépendamment de la commande de moteur (11).

9. Direction assistée selon la revendication 6, 7 ou 8, dans laquelle l'embrayage (9) est un embrayage électromagnétique.

10. Direction assistée selon l'une quelconque des revendications précédentes, dans laquelle le moteur électrique (8) est monté dans la direction de manière que son axe de rotation soit décalé transversalement par rapport à l'axe de l'organe allongé de direction (7), et un dispositif de transmission de rotation (9, 23, 24) est disposé afin qu'il compense le décalage transversal et transmette la rotation du moteur à l'écrou de l'ensemble à billes, vis et écrou.

11. Direction assistée selon la revendication 10, dans laquelle l'axe du moteur (8) est parallèle à l'axe de l'organe allongée de direction (7).

12. Direction assistée selon la revendication 10 ou 11, dans laquelle le moteur électrique (8) est logé dans une partie séparée de boîtier de la direction.

13. Direction assistée selon l'une quelconque des revendications 1 à 9, dans laquelle le moteur électrique (8) est monté dans la direction coaxialement à l'organe allongé de direction (7) et entoure cet organe allongé de direction (7), le rotor (108) du moteur (8) comportant un organe creux qui tourne autour de l'organe allongé de direction (7).

14. Direction assistée selon la revendication 13, dans laquelle l'ensemble à billes, vis et écrou (33, 29, 25) est placé axialement à distance du moteur électrique (8) suivant la longueur de l'organe allongé de direction (7), et le dispositif de transmission de rotation (9) est disposé afin qu'il compense l'espacement axial du moteur électrique (8) et de l'écrou (25) de l'ensemble à billes, vis et écrou (33, 29, 25).

15. Direction assistée selon la revendication 14, dans laquelle l'ensemble à billes, vis et écrou (33, 29, 25) et le moteur électrique (8) sont logés dans des parties séparées de boîtier de la direction.

16. Direction assistée selon la revendication 14 ou 15, dans laquelle le moteur électrique (8) est placé entre l'ensemble à billes, vis et écrou (33, 29, 25) et l'accouplement mécanique (16, 17) de l'organe allongé de direction (7) à la commande de direction (1) manoeuvrable par le conducteur.

17. Direction assistée selon la revendication 1, dans laquelle l'organe allongé de direction (7) a une crémaillère (17) placée dans une première partie longitudinale de l'organe allongé de direction (7) et destinée à être en prise avec un pignon (16) destiné à être entraîné par manoeuvre de la commande de direction (1) manoeuvrable par le conducteur, la crémaillère et le pignon formant l'accouplement mécanique placé entre l'organe allongé de direction (7) et la commande de direction (1) manoeuvrable par l'utilisateur, et ayant en outre un filetage (29) placé dans une seconde partie longitudinale de l'organe allongé de direction (7) à distance de la première partie de crémaillère, l'écrou (30) de l'organe à billes, vis et écrou (33, 29, 30) entourant une partie de la seconde partie filetée de l'organe allongé de direction (7) et ayant un taraudage qui est couplé au filetage (29) par des billes (33) de l'ensemble à billes, vis et écrou (33, 29, 30), si bien que la rotation de l'écrou (30) provoque le déplacement axial en translation de l'organe allongé de direction (7), le moteur électrique (8) étant monté de manière que son axe de rotation soit parallèle à l'organe allongé de direction (7) mais distant transversalement de celui-ci, et ayant un arbre de sortie (104) couplé, par un dispositif de transmission de rotation (9, 23, 24) à l'écrou (30) de l'ensemble à billes, vis et écrou (33, 29, 30).

18. Direction assistée selon la revendication 17, dans laquelle le dispositif de transmission de rotation (9, 23, 24) comporte un embrayage électromagnétique (9) qui peut être commandé sélectivement et un premier pignon (23) destiné à être entraîné par l'arbre de sortie du moteur (104) lorsque l'embrayage (9) est embrayé et qui est en prise avec un second pignon (24) destiné à faire tourner l'écrou (30) de l'ensemble à billes, vis et écrou (33, 29, 30).

19. Direction assistée selon la revendication 1, dans laquelle l'organe allongé de direction (7) a une crémaillère (17) disposée dans une première partie longitudinale de l'organe allongé de direction (7) et destinée à être en prise avec un pignon (16) destiné à être entraîné lors du fonctionnement de la commande de direction (1) manoeuvrable par le conducteur, l'ensemble à pignon et crémaillère constituant l'accouplement mécanique placé entre l'organe allongé de direction (7) et la commande de direction (1) manoeuvrable par le conducteur, l'organe allongé ayant en outre un filetage (29) placé dans une seconde partie longitudinale de l'organe allongé de direction (7) à distance de la première partie de crémaillère, l'écrou (25) de l'ensemble à billes, vis et écrou (33, 29, 25) entourant une partie de la seconde partie filetée de l'organe allongé de direction (7) et ayant un taraudage qui est couplé au filetage (29) par les billes (33) de l'ensemble à billes, vis et écrou (33, 29, 25), si bien que la rotation de l'écrou (25) provoque le déplacement axial en translation de l'organe allongé de direction (7), le moteur électrique (8) étant monté dans la direction entre l'emplacement auquel l'ensemble à pignon et crémaillère (17, 16) assure l'accouplement mécanique entre l'organe allongé de direction (7) et la commande de direction (1) manoeuvrable par le conducteur et l'emplacement distant de l'ensemble à billes, vis et écrou (33, 29, 25), et comprenant un rotor creux (108) coaxial à l'organe allongé de direction (7) qui passe dans sa partie creuse, le rotor (108) du moteur électrique (8) étant couplé à l'écrou (25) de l'ensemble à billes, vis et écrou (33, 29, 25) afin qu'il tourne lorsque le moteur est alimenté.

20. Direction assistée selon la revendication 18, dans laquelle le rotor (108) du moteur électrique (8) est couplé à l'écrou (25) de l'ensemble à billes, vis et écrou par un dispositif de transmission de rotation qui comprend un embrayage électromagnétique (9) qui peut être commandé sélectivement.

21. Direction assistée selon la revendication 9 et toute revendication qui en dépend, ou selon la revendication 18 ou la revendication 19, dans laquelle l'embrayage (9) comporte un disque magnétique (113, 124) de transmission de rotation couplé à une première partie rotative de manière mobile axialement, un disque de friction (130, 110) tourné vers le disque magnétique (113, 124) et couplé à demeure à une seconde partie rotative, et un bobinage électromagnétique (123, 116) destiné à déterminer électromagnétiquement le déplacement axial du disque magnétique (113, 124), la disposition étant telle que le disque magnétique (113, 124) peut se déplacer et venir en contact par friction, en transmettant le mouvement de rotation, avec le disque de friction (130, 110).

22. Direction assistée pour véhicule, comprenant un moteur électrique rotatif (8) un dispositif à transducteur (4) destiné à être associé à une commande (1) de direction manoeuvrable par un conducteur et destiné à détecter une force de direction qui lui est appliquée et à donner un signal correspondant de sortie, un dispositif (11) de commande de moteur commandé par le signal de sortie du dispositif à transducteur et destiné à déterminer l'énergie d'assistance donnée par le moteur, et un dispositif de conversion d'une rotation en translation (33, 29, 30) associé à la sortie du moteur (8) et destiné à déplacer en translation un organe de direction (7) avec une assistance du moteur, le dispositif de conversion d'une rotation en translation étant associé à un organe allongé de direction (7) qui est mobile axialement en sens opposés afin qu'il dirige le véhicule, par accouplement mécanique (16, 17) formé entre l'organe allongé de direction (7) et la commande de direction (1) manoeuvrable par un conducteur et comprenant un ensemble à billes, vis et écrou (33, 29, 30) destiné à coupler le moteur (8) à l'organe allongé de direction (7), le moteur (8) étant destiné à entraîner l'écrou (30) de l'ensemble à billes, vis et écrou (33, 29, 30) afin que le déplacement axial de l'organe allongé de direction (7) soit assisté par application d'une force d'entraînement par l'intermédiaire des billes (33) de l'ensemble à billes, vis et écrou (33, 29, 30) à un filetage (29) formé sur l'organe allongé (7), et un dispositif de transmission de rotation comporte un dispositif à engrenage (23, 24) destiné à transmettre la rotation du moteur (8) à l'écrou (30) de l'ensemble à billes, vis et écrou (33, 29, 30).

23. Direction assistée selon la revendication 22, dans laquelle un embrayage (9) qui peut être commandé sélectivement est incorporé au dispositif de transmission de rotation.

REVENDICATIONS pour l'Etat Contractant: BE

1. Direction assistée pour véhicule, comprenant un moteur électrique rotatif (8) un dispositif à transducteur (4) destiné à être associé à une commande (1) de direction manoeuvrable par un conducteur et destiné à détecter une force de direction qui lui est appliquée et à donner un signal correspondant de sortie, un dispositif (11) de commande de moteur commandé par le signal de sortie du dispositif à transducteur et destiné à déterminer l'énergie d'assistance donnée par le moteur, et un dispositif de conversion d'une rotation en translation (33, 29, 30) associé à la sortie du moteur (8) et destiné à déplacer en translation un organe de direction (7) avec une assistance du moteur, le dispositif de conversion d'une rotation en translation étant associé à un organe allongé de direction (7) qui est mobile axialement en sens opposés afin qu'il dirige le véhicule, par accouplement mécanique (16, 17) formé entre l'organe allongé de direction (7) et la commande de direction (1) manoeuvrable par un conducteur et comprenant un ensemble à billes, vis et écrou (33, 29, 30) destiné à coupler le moteur (8) à l'organe allongé de direction (7), le moteur (8) étant destiné à entraîner l'écrou (30) de l'ensemble à billes, vis et écrou (33, 29, 30) afin que le déplacement axial de l'organe allongé de direction (7) soit assisté bar application d'une force d'entraînement par l'intermédiaire des billes (33) de l'ensemble à billes, vis et écrou (33, 29, 30) à un filetage (29) formé sur l'organe allongé (7).

2. Direction assistée selon la revendication 1, dans laquelle la commande de direction (1) manoeuvrable par un conducteur comporte une colonne rotative (2) raccordée au volant (1) afin qu'elle tourne avec lui et l'accouplement mécanique formé entre l'organe allongé de direction (7) et le commande de direction manoeuvrable par le conducteur comporte un pignon (16) qui peut tourner avec la colonne rotative (2) et une crémaillère (17) formée sur l'organe allongé de direction (7) et disposée en prise avec le pignon (16).

3. Direction assistée selon la revendication 1 ou 2, dans laquelle l'ensemble à billes, vis et écrou (33, 29, 30) comporte un filetage (29) formé sur une partie de l'organe allongé de direction (7), un taraudage formé sur un écrou rotatif (30) qui entoure l'organe allongé de direction (7) et qui est tourné vers le filetage (29) formé sur l'organe allongé de direction (7), et plusieurs billes (33) de réduction de frottement placées en coopération avec la filetage et le taraudage et destinées à transmettre la rotation de l'écrou rotatif (30), sous l'action du moteur électrique (8), sous forme d'une translation axiale de l'organe allongé de direction (7).

4. Direction assistée selon l'une quelconque des revendications précédentes, comprenant une transmission (23, 24) formée entre la sortie du moteur électrique (8) et le dispositif de conversion d'une rotation en translation (33, 29, 30).

5. Direction assistée selon la revendication 4, dans laquelle la transmission (23, 24) comprend un engrenage réducteur.

6. Direction assistée selon l'une quelconque des revendications précédentes, dans laquelle un embrayage (9) qui fonctionne sélectivement est placé entre la sortie du moteur électrique (8) et le dispositif de conversion d'une rotation en translation (33, 29, 30), et un dispositif de commande (11) est destiné à déterminer sélectivement le fonctionnement de l'embrayage (9).

7. Direction assistée selon la revendication 6, dans laquelle l'embrayage (9) travaille entre un état débrayé dans lequel l'écrou (30) de l'ensemble à billes, vis et écrou (3, 29, 30) peut tourner par rapport au rotor du moteur électrique (8), et une position embrayée dans laquelle l'écrou (30) et le rotor du moteur (8) sont interconnectés afin qu'ils tournent par rapport à l'organe allongé de direction (7).

8. Direction assistée selon la revendication 6 ou 7, dans laquelle la commande d'embrayage (11) fonctionne indépendamment de la commande de moteur (11).

9. Direction assistée selon la revendication 6, 7 ou 8, dans laquelle l'embrayage (9) est un embrayage électromagnétique.

10. Direction assistée selon l'une quelconque des revendications précédentes, dans laquelle le moteur électrique (8) est monté dans la direction de manière que son axe de rotation soit décalé transversalement par rapport à l'axe de l'organe allongé de direction (7), et un dispositif de transmission de rotation (9, 23, 24) est disposé afin qu'il compense le décalage transversal et transmette la rotation du moteur à l'écrou de l'ensemble à billes, vis et écrou.

11. Direction assistée selon la revendication 10, dans laquelle l'axe du moteur (8) est parallèle à l'axe de l'organe allongée de direction (7).

12. Direction assistée selon la revendication 10 ou 11, dans laquelle le moteur électrique (8) est logé dans une partie séparée de boîtier de la direction.

13. Direction assistée selon l'une quelconque des revendications 1 à 9, dans laquelle le moteur électrique (8) est monté dans la direction coaxialement à l'organe allongé de direction (7) et entoure cet organe allongé de direction (7), le rotor (108) du moteur (8) comportant un organe creux qui tourne autour de l'organe allongé de direction (7).

14. Direction assistée selon la revendication 13, dans laquelle l'ensemble à billes, vis et écrou (33, 29, 25) est placé axialement à distance du moteur électrique (8) suivant la longueur de l'organe allongé de direction (7), et le dispositif de transmission de rotation (9) est disposé afin qu'il compense l'espacement axial du moteur électrique (8) et de l'écrou (25) de l'ensemble à billes, vis et écrou (33, 29, 25).

15. Direction assistée selon la revendication 14, dans laquelle l'ensemble à billes, vie et écrou (33, 29, 25) et le moteur électrique (8) sont logés dans des parties séparées de boîtier de la direction.

16. Direction assistée selon la revendication 14 ou 15, dans laquelle le moteur électrique (8) est placé entre l'ensemble à billes, vis et écrou (33, 29, 25) et l'accouplement mécanique (16, 17) de l'organe allongé de direction (7) à la commande de direction (1) manoeuvrable par le conducteur.

17. Direction assistée selon la revendication 1, dans laquelle l'organe allongé de direction (7) a une crémaillère (17) placée dans une première partie longitudinale de l'organe allongé de direction (7) et destinée à être en prise avec un pignon (16) destiné à être entraîné par manoeuvre de la commande de direction (1) manoeuvrable par le conducteur, la crémaillère et le pignon formant l'accouplement mécanique placé entre l'organe allongé de direction (7) et la commande de direction (1) manoeuvrable par l'utilisateur, et ayant en outre un filetage (29) placé dans une seconde partie longitudinale de l'organe allongé de direction (7) à distance de la première partie de crémaillère, l'écrou (30) de l'organe à billes, vis et écrou (33, 29, 30) entourant une partie de la seconde partie filetée de l'organe allongé de direction (7) et ayant un taraudage qui est couplé au filetage (29) par des billes (33) de l'ensemble à billes, vis et écrou (33, 29, 30), si bien que la rotation de l'écrou (30) provoque le déplacement axial en translation de l'organe allongé de direction (7), le moteur électrique (8) étant monté de manière que son axe de rotation soit parallèle à l'organe allongé de direction (7) mais distant transversalement de celui-ci, et ayant un arbre de sortie (104) couplé, par un dispositif de transmission de rotation (9, 23, 24) à l'écrou (30) de l'ensemble à billes, vis et écrou (33, 29, 30).

18. Direction assistée selon la revendication 17, dans laquelle le dispositif de transmission de rotation (9, 23, 24) comporte un embrayage électromagnétique (9) qui peut être commandé sélectivement et un premier pignon (23) destiné à être entraîné par l'arbre de sortie du moteur (104) lorsque l'embrayage (9) est embrayé et qui est en prise avec un second pignon (24) destiné à faire tourner l'écrou (30) de l'ensemble à billes, vis et écrou (33, 29, 30).

**19.** Direction assistée selon la revendication 1, dans laquelle l'organe allongé de direction (7) a une crémaillère (17) disposée dans une première partie longitudinale de l'organe allongé de direction (7) et destinée à être en prise avec un pignon (16) destiné à être entraîné lors du fonctionnement de la commande de direction (1) manoeuvrable par le conducteur, l'ensemble à pignon et crémaillère constituant l'aocouplement mécanique placé entre l'organe allongé de direction (7) et la commande de direction (1) manoeuvrable par le conducteur, l'organe allongé ayant en outre un filetage (29) placé dans une seconde partie longitudinale de l'organe allongé de direction (7) à distance de la première partie de crémaillère, l'écrou (25) de l'ensemble à billes, vis et écrou (33, 29, 25) entourant une partie de la seconde partie filetée de l'organe allongé de direction (7) et ayant un taraudage qui est couplé au filetage (29) par les billes (33) de l'ensemble à billes, vis et écrou (33, 29, 25), si bien que la rotation de l'écrou (25) provoque le déplacement axial en translation de l'organe allongé de direction (7), le moteur électrique (8) étant monté dans la direction entre l'emplacement auquel l'ensemble à pignon et crémaillère (17, 16) assure l'accouplement mécanique entre l'organe allongé de direction (7) et la commande de direction (1) manoeuvrable par le conducteur et l'emplacement distant de l'ensemble à billes, vis et écrou (33, 29, 25), et comprenant un rotor creux (108) coaxial à l'organe allongé de direction (7) qui passe dans sa partie creuse, le rotor (108) du moteur électrique (8) étant couplé à l'écrou (25) de l'ensemble à billes, vis et écrou (33, 29, 25) afin qu'il tourne lorsque le moteur est alimenté.

**20.** Direction assistée selon la revendication 18, dans laquelle le rotor (108) du moteur électrique (8) est couplé à l'écrou (25) de l'ensemble à billes, vis et écrou par un dispositif de transmission de rotation qui comprend un embrayage électromagnétique (9) qui peut être commandé sélectivement.

**21.** Direction assistée selon la revendication 9 et toute revendication qui en dépend, ou selon la revendication 18 ou la revendication 19, dans laquelle l'embrayage (9) comporte un disque magnétique (113, 124) de transmission de rotation couplé à une première partie rotative de manière mobile axialement, un disque de friction (130, 110) tourné vers le disque magnétique (113, 124) et couplé à demeure à une seconde partie rotative, et un bobinage électromagnétique (123, 116) destiné à déterminer électromagnétiquement le déplacement axial du disque magnétique (113, 124), la disposition étant telle que le disque magnétique (113, 124) peut se déplacer et venir en contact par friction, en transmettant le mouvement de rotation, avec le disque de friction (130, 110).

## Ansprüche

**1.** Servolenkungsanordnung für Fahrzeuge mit einem elektrischen Umlaufmotor (8), einer Übertragungseinrichtung (4) zur Verbindung mit einer von einem Fahrer betätigbaren Lenkeinrichtung (1) zum Abfühlen einer darauf ausgeübten Lenkkraft und zur Abgabe eines entsprechenden Ausgangssignals, einer Motorsteuereinrichtung (11), die entsprechend dem Ausgangssignal der Übertragungseinrichtung einen Lenkungsunterstützungsoutput des Motors festlegt, und mit einer Rotation-in-Translation umwandelnden Einrichtung (33, 29, 30), die mit dem Output des Motors (8) zur Translationsbewegung eines Lenkteils (7) mit Kraftunterstützung des Motors verbunden ist, wobei die Rotation-in-Translation umwandelnde Einrichtung mit einem langgestreckten Lenkteil (7) verbunden ist, das axial in entgegengesetzten Richtungen zum Lenken des Fahrzeugs aufgrund einer mechanischen Kupplung (16, 17) bewegbar ist, die zwischen dem langgestreckten Lenkteil (7) und der von dem Fahrer betätigbaren Lenkeinrichtung (1) angeordnet ist, dadurch gekennzeichnet, daß eine Kugel-, Spindel- und Mutteranordnung (33, 29, 30) den Motor (8) mit dem langgestreckten Lenkteil (7) koppelt und daß der Motor (8) die Mutter (30) der Kugel-, Spindel- und Mutteranordnung (33, 29, 30) antreibt, wodurch die axiale Bewegung des langgestreckten Lenkteils (7) aufgrund der Ausübung einer Antriebskraft über die Kugeln (33) der Kugel-, Spindel- und Mutteranordnung (33, 29, 30) auf ein Schraubengewinde (29) an dem langgestreckten Lenkteil (7) unterstützt wird, wobei der Motor (8) axial oder in Querrichtung von der Kugel-, Spindel- und Mutteranordnung (33, 29, 30) gegenüber der axialen Richtung des langgestreckten Lenkteils (7) beabstandet ist.

**2.** Servolenkungsanordnung nach Anspruch 1, dadurch gekennzeichnet, daß die von dem Fahrer betätigbare Lenkeinrichtung (1) eine drehbare Welle (2) aufweist, die mit einem Lenkr ad (1) zur gemeinsamen Drehung verbunden ist, und daß die mechanische Kupplung zwischen dem Lenkteil (7) und der von dem Fahrer betätigten Lenkeinrichtung ein Ritzelzahnrad (16), das mit der Welle (2) drehbar ist, und eine Zahnstange (17) an dem langgestreckten Lenkteil (7) aufweist, die mit dem Ritzelzahnrad (16) kämmt.

3. Servolenkungsanordnung nach Anspruch 1 oder 2,
   dadurch gekennzeichnet, daß die Kugel-, Spindel- und Mutteranordnung (33, 29, 30) ein Außengewinde (29) an einem Abschnitt des langgestreckten Lenkteils (7), ein Innengewinde an einer drehbaren Schraube (30), die das langgestreckte Lenkteil (7) umgibt und dem Außengewinde (29) an dem langgestreckten Lenkteil (7) gegenüberliegt, und mehrere die Reibung verringernde Kugeln (33) aufweist, die in das Innengewinde und das Außengewinde eingreifen, um die Drehung der drehbaren Mutter (30) infolge der Wirkung des elektrischen Motors (8) in eine axiale Translationsbewegung des langgestreckten Lenkteils (7) zu übertragen.

4. Servolenkungsanordnung nach einem der vorhergehenden Ansprüche,
   gekennzeichnet durch ein Getriebe (23, 24) zwischen dem Output des elektrischen Motors (8) und der Rotations-in-Translation umwandelnden Einrichtung (33, 29, 30).

5. Servolenkungsanordnung nach Anspruch 4,
   dadurch gekennzeichnet, daß das Getriebe (23, 24) ein Untersetzungsgetriebe ist.

6. Servolenkungsanordnung nach einem der vorhergehenden Ansprüche,
   dadurch gekennzeichnet, daß eine wahlweise betätigbare Kupplung (9) zwischen dem Output des elektrischen Motors und der Rotation-in-Translation umwandelnden Einrichtung (33, 29, 30) angeordnet ist, und daß eine Steuereinrichtung (11) wahlweise die Betätigung der Kupplung (9) bestimmt.

7. Servolenkungsanordnung nach Anspruch 6,
   dadurch gekennzeichnet, daß die Kupplung zwischen einem ausgerückten Zustand, in dem die Mutter (30) der Kugel-, Spindel- und Mutteranordnung (33, 29, 30) relativ zu dem Rotor des elektrischen Motors (8) drehbar ist, und einem eingerückten Zustand betätigbar ist, in dem die Mutter (30) und der Rotor des Motors (8) zur Drehung gegenüber dem langgestreckten Lenkteil (7) miteinander verbunden sind.

8. Servolenkungsanordnung nach Anspruch 6 oder 7,
   dadurch gekennzeichnet, daß die Kupplungssteuereinrichtung (11) unabhängig von der Motorsteuereinrichtung (11) betätigbar ist.

9. Servolenkungsanordnung nach Anspruch 6, 7 oder 8,
   dadurch gekennzeichnet, daß die Kupplung eine elektromagnetische Kupplung ist.

10. Servolenkungsanordnung nach einem der vorhergehenden Ansprüche,
    dadurch gekennzeichnet, daß die Drehachse des elektrischen Motors (8) in dem Zusammenbau in Querrichtung gegenüber der Achse des langgestreckten Lenkteils (7) versetzt ist und daß die Drehungsübertragungseinrichtung (9, 23, 24) diese Querversetzung kreuzt, um die von dem Motor hervorgerufene Drehung auf die Mutter der Kugel-, Spindel- und Mutteranordnung zu übertragen.

11. Servolenkungsanordnung nach Anspruch 10,
    dadurch gekennzeichnet, daß die Achse des Motors (8) parallel zur Achse des langgestreckten Lenkteils (7) verläuft.

12. Servolenkungsanordnung nach Anspruch 10 oder 11,
    dadurch gekennzeichnet, daß der elektrische Motor (8) in einem getrennten Gehäuseteil des Zusammenbaus untergebracht ist.

13. Servolenkungsanordnung nach einem der Ansprüche 1 bis 9,
    dadurch gekennzeichnet, daß der elektrische Motor (8) in dem Zusammenbau koaxial zu demlanggestreckten Lenkteil (7) angeordnet ist und das langgestreckte Lenkteil (7) umgibt, wobei der Rotor (108) des Motors (8) ein hohles Bauteil aufweist, das um das langgestreckte Lenkteil (7) rotiert.

14. Servolenkungsanordnung nach Anspruch 13,
    dadurch gekennzeichnet, daß die Kugel-, Spindel- und Mutteranordnung (33, 29, 25) axial von dem elektrischen Motor (8) in Längsrichtung des langgestreckten Lenkteils (7) beabstandet ist und daß die Rotationsübertragungseinrichtung (9) den axialen Abstand zwischen dem elektrischen Motor (8) und der Mutter (25) der Kugel-, Spindel- und Mutteranordnung (33, 29, 25) durchkreuzt.

15. Servolenkungsanordnung nach Anspruch 14,
    durch gekennzeichnet, daß die Kugel-, Spindel- und Mutteranordnung (33, 29, 25) und der elektrische Motor (8) in getrennten Gehäuseteilen des Zusammenbaus untergebracht sind.

16. Servolenkungsanordnung nach Anspruch 14 oder 15,
dadurch gekennzeichnet, daß der elektrische Motor (8) zwischen der Kugel-, Spindel- und Mutteranordnung (33, 29, 25) und der mechanischen Kupplung (16, 17) des langgestreckten Lenkteils (7) mit der von dem Fahrer betätigbaren Lenkeinrichtung (1) angeordnet ist.

17. Servolenkungsanordnung nach Anspruch 1,
dadurch gekennzeichnet, daß das langgestreckte Lenkteil (7) eine Zahnstange (17) an einem ersten Längsabschnitt des langgestreckten Lenkteils (7) zum kämmenden Eingriff mit einem Ritzelzahnrad (16) aufweist, das durch Betätigung der von dem Fahrer betätigbaren Lenkeinrichtung (1) drehbar ist, wobei das Zahnstangengetriebe die mechanische Kupplung zwischen dem langgestreckten Lenkteil (7) und der von dem Fahrer betätigbaren Lenkeinrichtung (1) bildet, und ferner ein Außenschraubengewinde (29) an einem zweiten Längsabschnitt des langgestreckten Lenkteils (7) aufweist, das von dem ersten Zahnstangenabschnitt beabstandet ist, daß die Mutter (30) der Kugel-, Spindel- und Mutteranordnung (33, 29, 30) einen Teil des Außengewindeabschnitts des langgestreckten Lenkteils (7) umfaßt und ein Innenschraubengewinde hat, das über die Kugeln (33) der Kugel-, Spindel- und Mutteranordnung (33, 29, 30) mit dem Außengewinde (29) gekoppelt ist, wodurch die Drehung der Mutter (30) eine axiale Translationsbewegung des langgestreckten Lenkteils (7) hervorruft, und daß die Drehachse des elektrischen Motors (8) parallel zu dem langgestreckten Lenkteil (7), jedoch in Querrichtung beabstandet, angeordnet ist und eine Ausgangswelle (140) hat, die über die Drehungsübertragungseinrichtung (9, 23, 24) mit der Mutter (30) der Kugel-, Spindel- und Mutteranordnung (33, 29, 30) gekoppelt ist.

18. Servolenkungsanordnung nach Anspruch 17,
dadurch gekennzeichnet, daß die Drehungsübertragungseinrichtung (9, 23, 24) eine wahlweise betätigbare elektromagnetische Kupplung (9) und ein erstes Zahnrad (23) aufweist, das von der Motorausgangswelle (104) angetrieben wird, wenn die Kupplung (9) eingerückt ist, und das mit einem zweiten Zahnrad (24) zur Drehung der Mutter (30) der Kugel-, Spindel- und Mutteranordnung (33, 29, 30) kämmt.

19. Servolenkungsanordnung nach Anspruch 1,
dadurch gekennzeichnet, daß das langgestreckte Lenkteil (7) eine Zahnstange (17) an einem ersten Längsabschnitt zum kämmenden Eingriff mit einem Ritzelzahnrad (16), das durch Betätigung der von dem Fahrer betätigbaren Lenkeinrichtung (1) gedreht wird, wobei dieser Zahnstangentrieb die mechanische Kupplung zwischen dem langgestreckten Lenkteil (7) und der von dem Fahrer betätigbaren Lenkeinrichtung (1) bildet, und ferner ein Außengewinde (29) an einem zweiten Längsabschnitt aufweist, das von dem Zahnstangenabschnitt beabstandet ist, daß die Mutter (25) der Kugel-, Spindel- und Mutteranordnung (33, 29, 25) einen Teil des Außengewindeabschnitts des langgestreckten Lenkteils (7) umfaßt und ein Innengewinde hat, das über die Kugeln (33) der Kugel-, Spindel- und Mutteranordnung (33, 29, 25) mit dem Außengewinde (29) gekoppelt ist, wobei die Drehung der Mutter (25) eine axiale Translationsbewegung des langgestreckten Lenkteils (7) hervorruft, daß der elektrische Motor (8) in dem Zusammenbau zwischen der Stelle, an der der Zahnstangentrieb (17, 16) die mechanische Kupplung zwischen dem langgestreckten Lenkteil (7) und der Lenkeinrichtung (1) bildet, und der beabstandeten Stelle der Kugel-, Spindel- und Mutteranordnung (33, 29, 25) angeordnet ist und einen hohlen Rotor (108) koaxial zu dem langgestreckten Lenkteil (7) aufweist, das sich durch dessen Innenraum erstreckt, und daß der Rotor (108) des elektrischen Motors (8) mit der Mutter (25) der Kugel-, Spindel- und Mutteranordnung (33, 29, 25) zu deren Drehung gekoppelt ist, wenn der Motor betätigt ist.

20. Servolenkungsanordnung nach Anspruch 18,
dadurch gekennzeichnet, daß der Rotor (108) des elektrischen Motors (8) mit der Mutter (25) der Kugel-, Spindel- und Mutteranordnung durch die Drehungsübertragungseinrichtung gekoppelt ist, die eine wahlweise betätigbare elektromagnetische Kupplung (9) aufweist.

21. Servolenkungsanordnung nach Anspruch 9 oder jedem von diesem Anspruch abhängigen Anspruch oder nach Anspruch 18 oder 19,
dadurch gekennzeichnet, daß die Kupplung (9) eine Rotation übertragende magnetische Scheibe (113, 124), die mit einem ersten Drehteil auf axial bewegbare Weise gekoppelt ist, eine Reibscheibe (130, 110), die der magnetischen Scheibe (113, 124) gegenüberliegt und fest mit einem zweiten Drehteil gekoppelt ist, und eine elektromagnetische Spule (123, 116) aufweist, die elektromagnetisch die axiale Bewegung der magnetischen Scheibe (113, 124) bestimmt, wobei die Anordnung so getroffen ist, daß die magnetische Scheibe (113, 124) in Rotation übertragenden Reibkontakt mit der Reibscheibe (130 , 110) bewegbar ist.

22. Servolenkungsanordnung für Fahrzeuge, gekennzeichnet durch einen elektrischen Umlaufmotor (8), eine Wandlereinrichtung (4) zur Verbindung mit einer von einem Fahrer betätigbaren Lenkeinrichtung (1) zum Erfassen einer darauf ausgeübten Lenkkraft und zur Abgabe eines entsprechenden Ausgangssignals, eine Motorsteuereinrichtung (11), die auf das Ausgangssignal der Wandlereinrichtung anspricht und einen Lenkunterstützungsoutput von dem Motor bestimmt, und eine Rotation-in-Translation umwandelnde Einrichtung (33, 29, 30), die mit dem Output des Motors (8) zur Translationsbewegung eines Lenkteils (7) mit Kraftunterstützung von dem Motor verbunden ist, wobei die Rotation-in-Translation umwandelnde Einrichtung mit einem langgestreckten Lenkteil (7) verbunden ist, das axial in entgegengesetzten Richtungen zum Lenken des Fahrzeugs über eine mechanische Kupplung (16, l7) bewegbar ist, die zwischen dem langgestreckten Lenkteil (7) und der von dem Fahrer betätigbaren Lenkeinrichtung (1) angeordnet ist und eine Kugel-, Spindel- und Mutteranordnung (33, 29, 30) zum Koppeln des Motors (8) mit dem langgestreckten Lenkteil (7) aufweist, wobei der Motor dieMutter (30) der Kugel-, Spindel- und Mutteranordnung (33, 29, 30) antreibt, wodurch die axiale Bewegung des langgestreckten Lenkteils (7) aufgrund der Aufbringung einer Antriebskraft auf ein Schraubengewinde (29) an dem langgestreckten Teil (7) durch die Kugeln (33) der Kugel-, Spindel- und Mutteranordnung (33, 29, 30) unterstützt ist, und wobei die Drehungsübertragungseinrichtung mit der Getriebeeinrichtung (23, 24) die Drehung des Motors (8) auf die Mutter (30) der Kugel-, Spindel- und Mutteranordnung (33, 29, 30) überträgt.

23. Servolenkungsanordnung nach Anspruch 22, dadurch gekennzeichnet, daß die Drehungsübertragungseinrichtung eine wahlweise betätigbare Kupplung (9) aufweist.

Patentansprüche für dem Vertragsstaat: BE

1. Servolenkungsanordnung für Fahrzeuge mit einem elektrischen Umlaufmotor (8), einer Übertragungseinrichtung (4), die mit einer von einem Fahrer betätigbaren Lenkeinrichtung (1) verbunden ist und eine darauf ausgeübte Lenkkraft abfühlt und ein entsprechendes Ausgangssignal abgibt, einer Motorsteuereinrichtung (11), die entsprechend dem Ausgangssignal der Übertragungseinrichtung einen Lenkungsunterstützungsoutput des Motors bestimmt, und mit einer Rotation-in-Translation umwandelnden Einrichtung (33, 29, 30), die mit dem Output des Motors (8) zur Translationsbewegung eines Lenkteils (7) mit Kraftunterstützung des Motors verbunden ist, wobei die Rotation-in-Translation umwandelnde Einrichtung mit einem langgestreckten Lenkteil (7) verbunden ist, das axial in entgegengesetzten Richtungen zum Lenken des Fahrzeugs aufgrund einer mechanischen Kupplung (16, 17) zwischen dem langgestreckten Lenkteil (7) und der von dem Fahrer betätigbaren Lenkeinrichtung (1) bewegbar ist, **dadurch gekennzeichnet,** daß eine Kugel-, Spindel- und Mutteranordnung (33, 29, 30) den Motor (8) mit dem langgestreckten Lenkteil (7) koppelt und daß der Motor (8) die Mutter (30) der Kugel-, Spindel- und Mutteranordnung (33, 29, 30) antreibt, wodurch die axiale Bewegung des langgestreckten Lenkteils (7) aufgrund der Ausübung einer Antriebskraft über die Kugeln (33) der Kugel-, Spindel- und Mutteranordnung (33, 29, 30) auf ein Schraubengewinde (29), das an dem langgestreckten Teil (7) ausgebildet ist, unterstützt wird.

2. Servolenkungsanordnung nach Anspruch 1, dadurch gekennzeichnet, daß die von dem Fahrer betätigbare Lenkeinrichtung (1) eine drehbare Welle (2) aufweist, die mit einem Lenkrad (1) zur gemeinsamen Drehung verbunden ist, und daß die mechanische Kopplung zwischen dem langgestreckten Lenkteil (7) und der von dem Fahrer betätigbaren Lenkeinrichtung ein Ritzelzahnrad (16), das mit der Welle (2) drehbar ist, und eine Zahnstange (17) aufweist, die an dem langgestreckten Lenkteil (7) angeordnet ist und mit dem Ritzelzahnrad (16) kämmt.

3. Servolenkungsanordnung nach Anspruch 1 oder 2, dadurch gekennzeichnet, daß die Kugel-, Spindel- und Mutteranordnung (33, 29, 30) ein Außengewinde (29) an einem Abschnitt des langgestreckten Lenkteils (7) aufweist, daß ein Innengewinde an einer drehbaren Mutter (30) ausgebildet ist, die auf dem langgestreckten Lenkteil (7) sitzt und dem Außengewinde (29) an dem langgestreckten Lenkteil (7) zugewandt ist, und daß mehrere reibungsreduzierende Kugeln (33) in Eingriff mit dem Innengewinde und dem Außengewinde stehen, um eine Drehung der drehbaren Mutter (30) unter Einwirkung des elektrischen Motors (8) in eine axiale Translationsbewegung des langgestreckten Lenkteils (7) zu übertragen.

4. Servolenkungsanordnung nach einem der vorhergehenden Ansprüche, dadurch gekennzeichnet, daß ein Getriebe (23, 24) zwischen dem Output des elektrischen Motors (8) und der Rotation-in-Translation umwandelnden Einrichtung (33, 29, 30) angeordnet ist.

5. Servolenkungsanordnung nach Anspruch 4, dadurch gekennzeichnet, daß das Getriebe (23, 24) ein Reduktionsgetriebe ist.

6. Servolenkungsanordnung nach einem der vorhergehenden Ansprüche, dadurch gekennzeichnet, daß eine wahlweise betätigbare Kupplung (9) zwischen dem Output des elektrischen Motors (8) und der Rotations-in-Translation umwandelnden Einrichtung (33, 29, 30) angeordnet ist, und daß die Steuereinrichtung (11) wahlweise die Betätigung der Kupplung (9) bestimmt.

7. Servolenkungsanordnung nach Anspruch 6, dadurch gekennzeichnet, daß die Kupplung (9) zwischen einem ausgerückten Zustand, in dem die Mutter (30) der Kugel-, Spindel- und Mutteranordnung (33, 29, 30) relativ zu dem Rotor des elektrischen Motors (8) drehbar ist, und einem eingerückten Zustand betätigbar ist, in dem die Mutter (30) und der Rotor des Motors (8) zur Drehung relativ zu dem langgestreckten Lenkteil (7) miteinander verbunden sind.

8. Servolenkungsanordnung nach Anspruch 6 oder 7, dadurch gekennzeichnet, daß die Kupplungssteuereinrichtung (11) unabhängig von der Motorsteuereinrichtung (11) betätigbar ist.

9. Servolenkungsanordnung nach Anspruch 6, 7 oder 8, dadurch gekennzeichnet, daß die Kupplung (9) eine elektromagnetische Kupplung ist.

10. Servolenkungsanordnung nach einem der vorhergehenden Ansprüche, dadurch gekennzeichnet, daß der elektrische Motor (8) so in dem Zusammenbau befestigt ist, daß seine Drehachse quer zur Achse des langgestreckten Lenkteils (7) versetzt ist, und daß die Drehungsübertragungseinrichtung (9, 23, 24) diese Querversetzung übergreift, um die Drehung des Motors auf die Mutter der Kugel-, Spindel- und Mutteranordnung zu übertragen.

11. Servolenkungsanordnung nach Anspruch 10, dadurch gekennzeichnet, daß die Achse des Motors (8) parallel zur Achse des langgestreckten Lenkteils (7) angeordnet ist.

12. Servolenkungsanordnung nach Anspruch 10 oder 11, dadurch gekennzeichnet, daß der elektrische Motor (8) in einem getrennten Gehäuseteil des Zusammenbaus angeordnet ist.

13. Servolenkungsanordnung nach einem der Ansprüche 1 bis 9, dadurch gekennzeichnet, daß der elektrische Motor (8) in dem Zusammenbau koaxial zu dem langgestreckten Lenkteil (7) angeordnet ist und dieses Teil (7) umfaßt, wobei der Rotor (108) des Motors (8) ein hohles Bauteil aufweist, das um das langgestreckte Lenkteil (7) rotiert.

14. Servolenkungsanordnung nach Anspruch 13, dadurch gekennzeichnet, daß die Kugel-, Spindel- und Mutteranordnung (33, 29, 25) axial von dem elektrischen Motor (8) in Längsrichtung des langgestreckten Lenkteils (7) beabstandet ist, und daß die Drehungsübertragungseinrichtung (9) den axialen Abstand zwischen dem elektrischen Motor (8) und der Mutter (25) der Kugel-, Spindel- und Mutteranordnung (33, 29, 25) überbrückt.

15. Servolenkungsanordnung nach Anspruch 14, dadurch gekennzeichnet, daß die Kugel-, Spindel- und Mutteranordnung (33, 29, 25) und der elektrische Motor (8) in getrennten Gehäuseteilen des Zusammenbaus angeordnet sind.

16. Servolenkungsanordnung nach Anspruch 14 oder 15, dadurch gekennzeichnet, daß der elektrische Motor (8) zwischen der Kugel-, Spindel- und Mutteranordnung (33, 29, 25) und der mechanischen Kupplung (16, 17) des langgestreckten Lenkteils (7) mit der von dem Fahrer betätigbaren Lenkeinrichtung (1) angeordnet ist.

17. Servolenkungsanordnung nach Anspruch 1, dadurch gekennzeichnet, daß das langgestreckte Lenkteil (7) eine Zahnstange (17) an einem ersten Längsabschnitt des langgestreckten Lenkteils (7) zum kämmenden Eingriff mit einem Ritzelzahnrad (16) aufweist, das durch Betätigung der Lenkeinrichtung (1) gedreht wird, wobei der Zahnstangentrieb die mechanische Kupplung zwischen dem langgestreckten Lenkteil (7) und der von dem Fahrer betätigbaren Lenkeinrichtung (1) bildet, und ferner ein Außengewinde (29) aufweist an einem zweiten Längsabschnitt des langgestreckten Lenkteils (7) im Abstand von dem ersten Zahnstangenabschnitt, wobei die Mutter (30) der Kugel-, Spindel- und Mutteranordnung (33, 29, 30) einen Teil des Außengewindeabschnitts des langgestreckten Lenkteils (7) umfaßt und ein Innengewinde enthält, das mit dem Außengewinde (29) über die Kugeln (33) der Kugel-, Spindel- und Mutteranordnung (33, 29, 30) gekoppelt ist, wodurch die Drehung der Mutter (30) eine axiale Translationsbewegung des langgestreckten Lenkteils (7) hervorruft, und daß der elektrische Motor so angebracht ist, daß seine Drehachse parallel zu und beabstandet von dem langgestreckten Lenkteil (7) liegt, wobei die Ausgangswelle (104) des Motors über die Drehungsübertragungseinrichtung (9, 23, 24) mit der Mutter (30) der Kugel-, Spindel- und Mutteranordnung (33, 29, 30) gekoppelt ist.

18. Servolenkungsanordnung nach Anspruch 17, dadurch gekennzeichnet, daß die Drehungsübertragungseinrichtung (9, 23, 24) eine wahlweise betätigbare elektromagnetische Kupplung (9) aufweist und daß ein erstes Zahnrad (23) von der Motorausgangswelle (104) angetrieben wird, wenn die Kupplung (9) mit einem zweiten Zahnrad (24) kämmt, das die Mutter (30) der Kugel-, Spindel- und Mutteranordnung (33, 29, 30) dreht.

19. Servolenkungsanordnung nach Anspruch 1, dadurch gekennzeichnet, daß das langgestreckte Lenkteil (7) eine Zahnstange (17) an einem ersten Längsabschnitt zum kämmenden Eingriff mit einem Ritzelzahnrad (16), das durch Betätigung der von dem Fahrer betätigbaren Lenkeinrichtung (1) gedreht wird, wobei dieser Zahnstangentrieb die mechanische Kupplung zwischen dem langgestrecktenLenkteil (7) und der von dem Fahrer betätigbaren Lenkeinrichtung (1) bildet, und ferner ein Außengewinde (29) an einem zweiten Längsabschnitt des langgestreckten Lenkteils (7) im Abstand von dem ersten Zahnstangenabschnitt aufweist, daß die Mutter (25) der Kugel-, Spindel- und Mutteranordnung (33, 29, 25) einen Teil des Außengewindeabschnitts des langgestreckten Lenkteils (7) umfaßt und ein Innengewinde aufweist, das mit dem Außengewinde (29) über die Kugeln (33) der Kugel-, Spindel- und Mutteranordnung (33, 29, 25) gekoppelt ist, wodurch die Drehung der Mutter (25) eine axiale Translationsbewegung des langgestreckten Lenkteils (7) hervorruft, daß der elektrische Motor (8) in dem Zusammenbau zwischen der Stelle, an der der Zahnstangentrieb (17, 16) die mechanische Kupplung zwischen dem langgestreckten Lenkteil (7) und der von dem Fahrer betätigbaren Lenkeinrichtung (1) bildet, und der beabstandeten Stelle der Kugel-, Spindel- und Mutteranordnung (33, 29, 25) angeordnet ist und einen hohlen Rotor (108) koaxial zu dem langgestreckten Lenkteil (7) aufweist, das sich durch den hohlen Rotor erstreckt, und daß der Rotor (108) des elektrischen Motors (8) mit der Mutter (25) der Kugel-, Spindel- und Mutteranordnung (33, 29, 25) zu deren Drehung gekoppelt ist, wenn der Motor betätigt ist.

20. Servolenkungsanordnung nach Anspruch 18, dadurch gekennzeichnet, daß der Rotor (108) des elektrischen Motors (8) mit der Mutter (25) der Kugel-, Spindel- und Mutteranordnung durch die Drehungsübertragungseinrichtung gekoppelt ist, die eine wahlweise betätigbare elektromagnetische Kupplung (9) aufweist.

21. Servolenkungsanordnung nach Anspruch 9 oder jedem davon abhängigen Anspruch, 18 oder 19, dadurch gekennzeichnet, daß die Kupplung (9) eine Rotation übertragende magnetische Scheibe (113, 124), die mit einem ersten Drehteil auf axial bewegbare Weise gekoppelt ist, eine Reibscheibe (130, 110), die der magnetischen Scheibe (113, 124) gegenüberliegt und fest mit einem zweiten Drehteil gekoppelt ist, und eine elektromagnetische Spule (123, 116) aufweist, die elektromagnetisch die axiale Bewegung der magnetischen Scheibe (113, 124) bestimmt, wobei die Anordnung so getroffen ist, daß die magnetische Scheibe (113, 124) in Rotation übertragenden Reibkontakt mit der Reibscheibe (130, 110) bewegbar ist.

# FIG. 1

# FIG. 4

# FIG. 2

EP 0 133 003 B1

# FIG. 3

EP 0 133 003 B1

# FIG. 5

## FIG. 6

FIG. 7